(19) Europäisches Patentamt
European Patent Office
Office européen des brevets

(11) EP 3 101 927 A1

(12) **EUROPEAN PATENT APPLICATION**
published in accordance with Art. 153(4) EPC

(43) Date of publication:
**07.12.2016 Bulletin 2016/49**

(21) Application number: **15743073.7**

(22) Date of filing: **22.01.2015**

(51) Int Cl.:
***H04W 8/00*** *(2009.01)*
***H04W 56/00*** *(2009.01)*
***H04W 72/04*** *(2009.01)*
***H04W 84/10*** *(2009.01)*
***H04W 92/18*** *(2009.01)*

(86) International application number:
**PCT/JP2015/051599**

(87) International publication number:
**WO 2015/115283 (06.08.2015 Gazette 2015/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.01.2014 JP 2014015823**

(71) Applicant: **NTT DOCOMO, INC.**
**Chiyoda-ku**
**Tokyo 100-6150 (JP)**

(72) Inventors:
- **HARADA, Hiroki**
  **Tokyo 100-6150 (JP)**
- **ZHAO, Qun**
  **Beijing 100190 (CN)**
- **ZENG, Yongbo**
  **Beijing 100190 (CN)**
- **ZHANG, Yongsheng**
  **Beijing 100190 (CN)**

(74) Representative: **Hoffmann Eitle**
**Patent- und Rechtsanwälte PartmbB**
**Arabellastraße 30**
**81925 München (DE)**

(54) **USER TERMINAL, WIRELESS BASE STATION, WIRELESS COMMUNICATION METHOD, AND WIRELESS COMMUNICATION SYSTEM**

(57) To suppress reduction in throughput of the entire system in the case of determining transmission/reception timing of a D2D discovery signal based on a predetermined downlink signal from a radio base station, a user terminal (20) according to one Embodiment of the present invention is capable of transmitting an inter-terminal discovery signal to another user terminal under control of a different cell from a cell where the user terminal exists, and is characterized by having a reception section (203) that receives a signal including resource allocation information of the inter-terminal discovery signal and a predetermined downlink signal used in synchronization of transmission/reception timing of the inter-terminal discovery signal, which are transmitted from a radio base station (10) for forming the cell where the user terminal exists, and a control section (401) that controls transmission/reception timing of the inter-terminal discovery signal based on the resource allocation information and reception timing of the predetermined downlink signal, where the control section maps a resource for transmission of the inter-terminal discovery signal so as to perform time division multiplexing for a plurality of cells with different cell radiuses.

FIG.6A

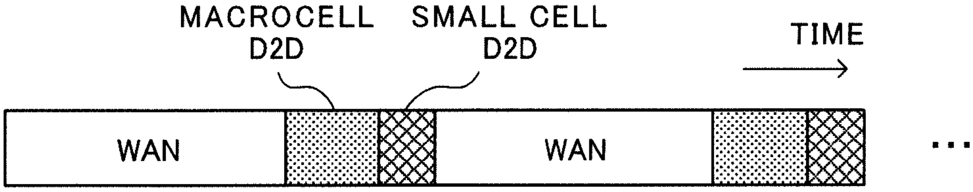


EP 3 101 927 A1

FIG.6B

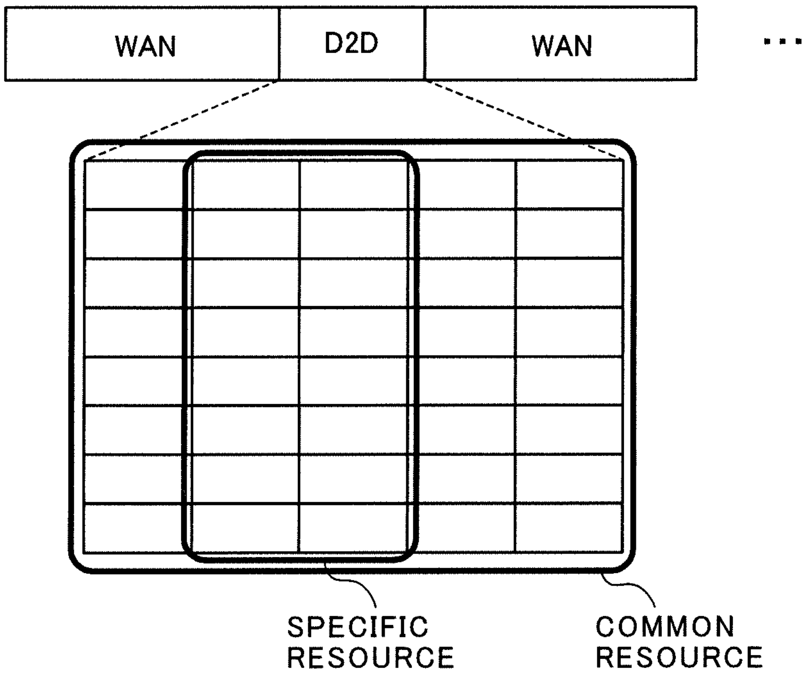
WAN
D2D
WAN
...
SPECIFIC RESOURCE
COMMON RESOURCE

FIG.6C

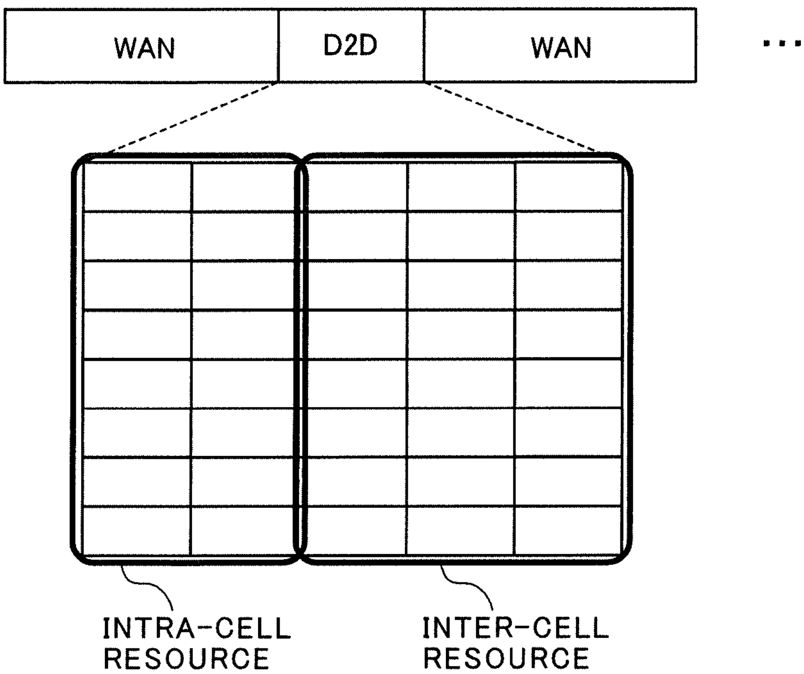
WAN
D2D
WAN
...
INTRA-CELL RESOURCE
INTER-CELL RESOURCE

## Description

### Technical Field

The present invention relates to a user terminal, radio base station, radio communication method and radio communication system in the next-generation mobile communication system.

### Background Art

In LTE (Long Term Evolution) and a successor system (for example, also referred to as LTE- Advanced (LTE-A), FRA (Future Radio Access), 4G and the like) to LTE, radio communication systems (for example, also referred to as Heterogeneous network and HetNet) have been studied in which a small cell (including a picocell, femtocell and the like) having relatively small coverage with a radius of about several meters to several tens of meters is arranged, while overlapping a macrocell having relatively large coverage with a radius of about several hundreds of meters to several kilometers (for example, Non-patent Document 1).

Further, inter-terminal communication techniques (D2D (Device to Device) techniques) have been studied in which user terminals directly communicate with one another by bypassing a radio base station (for example, Non-patent Document 2). By direct signal transmission/reception between user terminals (D2D terminals), it is possible to achieve D2D discovery, D2D synchronization, D2D communication and the like. In view of reduction in power consumption of the D2D terminal and the like, it has been studied that a radio base station where the D2D terminal exists notifies of a control signal concerning D2D signal transmission/reception.

### Citation List

### Non Patent Literature

Non-Patent Literature 1: 3GPP TR 36.814 "Evolved Universal Terrestrial Radio Access (E-UTRA); Further advancements for E-UTRA physical layer aspects"

Non-Patent Literature 2: "Key drivers for LTE success: Services Evolution", 2011 September, 3GPP, Internet URL: http://www.3gpp.org/ftp/Information/presentations/presentations_2011/2011_09_LTE _Asia/2011_LTE-Asia_3GPP_Service_evolution.pdf

### Summary of Invention

### Technical Problem

When the D2D terminal exists inside network coverage, it has been studied that transmission/reception timing of a D2D discovery signal (hereinafter, simply referred to as discovery signal) is determined based on a predetermined downlink signal (for example, PSS (Primary Synchronization Signal)/SSS (Secondary Synchronization Signal), CRS (Cell-specific Reference Signal) and the like) from a radio base station. By this means, all D2D terminals inside the area including terminals in an idle state are capable of determining transmission/reception timing of the discovery signal.

However, in the Heterogeneous network in which the macrocell and small cell coexist, when transmission/reception of the discovery signal is performed between cells, due to a difference in the cell radius between the cells where the D2D terminals exist, a deviation occurs in synchronization of transmission/reception timing of the discovery signal, and there is the risk that throughput of the entire system is reduced.

The present invention was made in view of such a respect, and it is an object of the invention to provide a user terminal, radio base station, radio communication method and radio communication system for enabling reduction in throughput of the entire system to be suppressed, in the case of determining transmission/reception timing of a discovery signal based on a predetermined downlink signal from the radio base station in the Heterogeneous network in which the macrocell and small cell coexist.

### Solution to Problem

A user terminal according to one Embodiment of the present invention is a user terminal capable of transmitting an inter-terminal discovery signal to another user terminal under control of a different cell from a cell where the user terminal exists, and is characterized by having a reception section that receives a signal including resource allocation information of the inter-terminal discovery signal and a predetermined downlink signal used in synchronization of transmission/reception timing of the inter-terminal discovery signal, which are transmitted from a radio base station for forming the cell where the user terminal exists, and a control section that controls transmission/reception timing of the inter-terminal discovery signal based on the resource allocation information and reception timing of the predetermined downlink signal, where the control section maps a resource for transmission of the inter-terminal discovery signal so as to perform time division multiplexing for a plurality of cells with different cell radiuses.

Advantageous Effects of Invention

According to the present invention, it is possible to suppress reduction in throughput of the entire system, in the case of determining transmission/reception timing of the discovery signal based on the predetermined downlink signal from the radio base station in the Heterogeneous network in which the macrocell and small cell coexist.

Brief Description of Drawings

FIG. 1 contains diagrams showing one example of control signal and D2D signal according to D2D signal transmission/reception resources;
FIG. 2 is an explanatory diagram of a deviation of reception timing of a discovery signal in two D2D terminals existing in the same cell;
FIG. 3 is an explanatory diagram of the deviation of reception timing of the discovery signal in two D2D terminals existing in different cells;
FIG. 4 is another explanatory diagram of the deviation of reception timing of the discovery signal in two D2D terminals existing in different cells;
FIG. 5 is a diagram showing one example of symbols of the discovery signal transmitted from three user terminals;
FIG. 6 contains schematic diagrams of a D2D resource group allocated to the discovery signal in Aspect 1 of this Embodiment;
FIG. 7 is a diagram showing one example of a D2D resource group allocated to the discovery signal in Aspect 1.2 of this Embodiment;
FIG. 8 is a diagram showing one example of the D2D resource group in the case of notifying of assistance information in Aspect 1.2 of this Embodiment;
FIG. 9 is a sequence diagram in the case where a macro base station performs D2D resource group allocation of the discovery signal in Aspect 1 of this Embodiment;
FIG. 10 is a sequence diagram in the case where macro base station and small base station perform D2D resource group allocation of the discovery signal in cooperation with each other in Aspect 1 of this Embodiment;
FIG. 11 is an explanatory diagram illustrating a processing flow in Aspect 2 of this Embodiment;
FIG. 12 is a schematic diagram showing one example of a radio communication system according to this Embodiment;
FIG. 13 is an explanatory diagram of an entire configuration of a radio base station according to this Embodiment;
FIG. 14 is an explanatory diagram of a function configuration of the radio base station according to this Embodiment;
FIG. 15 is an explanatory diagram of an entire configuration of a user terminal according to this Embodiment; and
FIG. 16 is an explanatory diagram of a function configuration of the user terminal according to this Embodiment.

Description of Embodiments

An Embodiment of the present invention will specifically be described below with reference to drawings.
A periodical uplink resource group is allocated to a D2D terminal in a semi-static manner, as D2D signal transmission/reception resources (hereinafter, also referred to as D2D resources). Each D2D terminal transmits a signal using a part of the D2D resource group. Resources used in transmission are determined by a method where the D2D terminal autonomously selects from the D2D resource group, or determined by another method where a radio base station or another D2D terminal notifies of particular resources with a control signal. Further, the D2D terminal discovers another D2D terminal and performs communications inside the D2D resource group, by receiving a signal transmitted from another D2D terminal.
The radio base station or D2D terminal notifies of a control signal to designate the D2D resource group. FIG. 1 contains diagrams showing one example of the control signal and D2D signal according to D2D signal transmission/reception resources.
FIG. 1A is a diagram to explain an example where D2D terminals exist inside network coverage. As shown in FIG. 1A, when the D2D terminal exists inside network coverage, a radio base station controls D2D resources inside the coverage. The D2D terminal performs transmission/reception operation of signal according to control of the radio base station.

FIGs. 1B and 1C are diagrams to explain an example where D2D terminals exist outside network coverage. As shown in FIG. 1B, when D2D terminals exist outside network coverage, some D2D terminal becomes a cluster head to control the other D2D terminals. The other D2D terminals perform transmission/reception operation of signal according to control of the cluster head. Alternatively, as shown in FIG. 1C, the D2D terminals control each other to perform transmission/reception operation of signal.

Control of D2D resources by the radio base station eliminates the need for cluster head operation of the D2D terminal inside network coverage, and is capable of reducing power consumption of the D2D terminal, and therefore, wide use thereof has been studied. For example, it has been studied that control of D2D resources by the radio base station (FIG. 1A) is used in commercial use cases such as SNS (Social Networking Service) by inter-terminal direct communication functions (proximity-based service) and advertisement delivery. On the other hand, it has been studied that autonomous operation of the D2D terminal (FIG. 1B) or control of D2D resources between terminals (FIG. 1C) is used in the case of urgent communication at the time of disaster, for example.

Control of D2D resources by the radio base station will further be described below. First, allocation of a D2D resource group will be described. As the D2D resource group, it has been studied to use a part of uplink resources in normal cellular communications. In order to avoid interference, the cellular communication signal and D2D signal are subjected to time division multiplexing (TDM).

A cellular base station notifies D2D terminals inside the area of D2D resource group allocation information, using system information included in system information block (SIB) and the like to broadcast. The D2D resource group allocation information includes a carrier frequency (carrierFreq-D2D) and time-domain resource information of the D2D resource group.

In addition, the cellular base station may notify D2D terminals inside the area of the D2D resource group allocation information, using higher layer signaling such as RRC (Radio Resource Control) signaling or broadcast signal.

Thus, by the cellular base station notifying all D2D terminals inside the area of the D2D resource group allocation information using the system information, all of the D2D terminals inside the area including D2D terminals in an idle state are capable of recognizing the same time frequency resources as the D2D resource group. The D2D terminal performs transmission/reception of the D2D signal according to the D2D resource group allocation information included in the system information of the cell to which the D2D terminal is connected or where the terminal exists.

The D2D terminal recognizing the D2D resource group determines transmission/reception timing of a discovery signal, based on a predetermined downlink signal (for example, PSS (Primary Synchronization Signal)/SSS (Secondary Synchronization Signal), CRS (Cell-specific Reference Signal) and the like) from the radio base station. Since it is difficult to notify the D2D terminal in the idle state of the information on transmission/reception timing adjustments of the discovery signal individually, a downlink signal from the radio base station capable of being recognized commonly in each D2D terminal is used as a reference of synchronization (synchronization source). By this means, all of the D2D terminals inside the area including D2D terminals in the idle state are capable of establishing synchronization of transmission/reception timing of the discovery signal.

The downlink signal as the synchronization source will be referred to as a synchronization source signal below. Further, timing at which the D2D terminal receives the synchronization source signal will be referred to as receiving reference timing.

When the D2D terminal synchronizes to the synchronization source signal from the radio base station, since the receiving reference timing differs according to a position of the D2D terminal, a deviation occurs in reception timing of the discovery signal. FIG. 2 is an explanatory diagram of the deviation of reception timing of the discovery signal in two D2D terminals existing in the same cell.

FIG. 2 shows the example where UE1 and UE2 that are D2D terminals exist inside a cell formed by a radio base station eNB and the UE2 transmits the discovery signal. In addition, a distance between the UE1 and the UE2 is D, a distance between the eNB and the UE1 is D1, and a distance between the eNB and the UE2 is D2 (D2>D1). Further, the transmitted or received signal is assumed to propagate at c ($\approx 3.0 \times 10^8$ m/s) that is the speed of light. Further, the shape of the coverage area of the cell is one example, and is not limited to the shape as shown in the figure.

In FIG. 2, the synchronization source signal transmitted from the eNB at predetermined timing arrives at the UE1 after D1/c and at the UE2 after D2/c. Further, upon receiving the downlink signal, the UE2 transmits a discovery signal, and the discovery signal arrives at the UE1 further after D/c. From the foregoing, the reception timing of the discovery signal of the UE1 deviates from the receiving reference timing based on the eNB by Timing offset shown in the following (Equation 1).

$$\text{Timing offset} = (D+D2-D1)/c \qquad \cdots \text{(Equation 1)}$$

In addition, in the case of FIG. 2, a range of possible values of (Equation 1) is [0, 2D/c]. For example, a minimum value is obtained in the case where the UE1 and UE2 exist in the same position. For example, a maximum value is obtained in the case where the UE1 and eNB exist in the same position.

Further, it is considered that D2D terminals existing in coverage of different cells transmit and receive the discovery signal to/from each other. For example, it is the case where each of a plurality of D2D terminals exists near the cell edge in two adjacent cells. In this case, each D2D terminal determines transmission/reception timing of the discovery signal, based on timing (receiving reference timing) at which the terminal receives the synchronization source signal transmitted from the radio base station of the cell where the terminal exists.

FIG. 3 is an explanatory diagram of the deviation of reception timing of the discovery signal in two D2D terminals existing in different cells. FIG. 3 shows the case where UE1 that is the D2D terminal exists inside a cell 1 formed by a radio base station eNB1, UE2 that is the D2D terminal exists inside a cell 2 formed by a radio base station eNB2, and the UE1 transmits the discovery signal. In addition, a distance between the UE1 and the UE2 is D, a distance between the eNB1 and the UE1 is D1, and a distance between the eNB2 and the UE2 is D2. Further, the transmitted or received signal is assumed to propagate at c that is the speed of light. Further, base stations are already synchronized in transmission timing of the synchronization source signal that the eNB1 and eNB2 transmit which is a reference of transmission/reception timing of the discovery signal.

In FIG. 3, the synchronization source signal transmitted from the eNB1 at predetermined timing arrives at the UE1 after D1/c. Upon receiving the signal, the UE1 transmits a discovery signal, and the discovery signal arrives at the UE2 further after D/c. Furthermore, the synchronization source signal transmitted from the eNB2 at the same timing as in the eNB 1 arrives at the UE2 after D2/c. From the foregoing, reception timing of the discovery signal of the UE2 deviates from the receiving reference timing based on the eNB2 by Timing offset shown in the following (Equation 2).

$$\text{Timing offset} = (D+D1-D2)/c \qquad \cdots \text{(Equation 2)}$$

In addition, in the case of FIG. 3, a range of possible values of (Equation 2) is [-ΔR/c, (2D+ΔR)/c]. Herein, ΔR is an absolute value of the difference in the cell radius, and when it is assumed that the radius of the cell 1 is R1 and that the radius of the cell 2 is R2, ΔR is represented by |R1-R2| (ΔR=|R1-R2|). ΔR/c expresses a maximum value of the difference in receiving reference timing between cells, in the case where a downlink signal that is the synchronization source is transmitted from each cell at the same timing. In addition, when the cell radiuses are the same (R1=R2), the range of possible values of (Equation 2) is the same as the range of possible values of (Equation 1).

For example, a minimum value of (Equation 2) is obtained in the case where R1<R2, the UE1 exists in the same position as that of the eNB1, and the UE2 exists in the cell edge of the cell 2 on the side closer to the cell 1. On the other hand, for example, a maximum value is obtained in the case where R1>R2, the UE1 exists in the cell edge of the cell 1 on the side closer to the cell 2, and the UE2 exists in the same position as that of the eNB2.

From the foregoing, it is understood that the cell radius significantly affects timing of receiving the discovery signal between cells. Therefore, in the Heterogeneous network where the macrocell and small cell with different cell radiuses coexist, the Timing offset of the discovery signal as described above is a serious problem. The problem will be described with reference to FIGs. 4 and 5.

FIG. 4 is an explanatory diagram of the deviation of reception timing of the discovery signal in two D2D terminals existing in different cells. FIG. 4 is different from FIG. 3 in the respect that the UE1 is positioned in the cell edge of a macrocell formed by a macro base station MeNB, and that the UE2 is positioned in the cell edge of a small cell formed by a small base station SeNB.

In FIG. 4, when transmission timing of the synchronization source signal is already synchronized between the MeNB and the SeNB, the receiving reference timing deviates by ΔR/c between the UE1 and the UE2. For example, when it is assumed that the radius of the macrocell is 500 m and that the radius of the small cell is 50 m, the equation of ΔR/c=1.5 μs holds. Further, when it is assumed that the radius of the macrocell is 1920 m and that the radius of the small cell is 120 m, the equation of ΔR/c=6 μs holds. A timing error of the order of microseconds is delay that is not negligible in reception processing.

The discovery signal is configured to be able to absorb variations in delay at the time of reception to some extent. FIG. 5 is a diagram showing one example of symbols of the discovery signal transmitted from three user terminals. Specifically, as shown in FIG. 5, a cyclic prefix (CP) is added to the beginning, and is configured to reduce inter-symbol interference (ISI) due to multipath dely. By this means, when reception timing of symbols of the discovery signal from each user terminal is included in the range of a demodulation window in FIG. 5, it is configured that it is possible to apply Fast Fourier Transform (FTT) collectively to a plurality of signals to demodulate.

However, as shown in the example of FIG. 4, in the case where a difference of the order of microseconds occurs in reception timing, in order to prevent the occurrence of inter-symbol interference (ISI), the need arises for relatively increasing the CP length. When the CP length is increased, an information amount included in the symbol decreases, and therefore, transmission efficiency of the discovery signal is reduced.

From the foregoing, in the Heterogeneous network in which the macrocell and small cell with different cell radiuses coexist, due to the fact that the deviation occurs in synchronization of transmission/reception timing of the discovery signal, there is the risk that throughput of the entire system is reduced.

In order to solve the problem, the inventors of the present invention conceived transmitting the discovery signal of the D2D terminal so as to reduce the effect of the deviation in synchronization of transmission/reception timing due to the cell radius. Specifically, the inventors of the invention conceived that a D2D resource group according to transmission of the discovery signal is subjected to time division multiplexing (TDM) for a plurality of cells with different cell radiuses and allocated. Further, the inventors conceived changing transmission timing of the synchronization source signal from the radio base station for each cell.

According to these configurations, it is possible to reduce the effect of the difference in receiving reference timing between cells with different cell radiuses. Specifically, using the receiving reference timing as a reference, it is possible to control transmission timing of the discovery signal, so that a range of possible values of the time difference (above-mentioned Time offset) between the reference and reception timing of the discovery signal is the same as a range of possible values of Timing offset in the case of regarding a plurality of cells with different cell radiuses as a single integrated cell.

For example, the Timing offset of the discovery signal between different cells is $[-\Delta R/c, (2D+\Delta R)/c]$ that is the range of possible values of (Equation 2), and is capable of being made $[0, 2D/c]$ that is the range of possible values of (Equation 1) according to a single cell. Therefore, it is possible to suppress extension of the CP length according to the discovery signal, and it is possible to suppress reduction in throughput of the entire system.

A radio communication method according to one Embodiment (hereinafter, referred to as this Embodiment) of the present invention will specifically be described below. The following description will explain transmission/reception of the discovery signal of a D2D terminal existing in a macrocell, and a D2D terminal existing in a small cell adjacent to the macrocell as an example, but the invention is not limited thereto. For example, adjacent cells may be macrocells with different cell radiuses, or the number of adjacent cells may be two or more.

In addition, the cell radius is varied according to transmission power of a radio wave of the radio base station forming the cell, frequency of the radio wave, position (height) of the antenna to transmit the radio wave and the like. In this Embodiment, the cell radius is noted, and may be read with one of the aforementioned matters. For example, it is possible to read that the cell radius is large with that transmission power of the radio wave is high, the frequency of the radio wave is low, and that the position of the antenna to transmit the radio wave is high.

(Aspect 1)

Aspect 1 of the radio communication method according to this Embodiment is to perform time division multiplexing (TDM) on a D2D resource group allocated to the discovery signal for each of a plurality of cells with different cell radiuses to allocate. As described above, in this Embodiment, the cellular communication signal and D2D signal are subjected to TDM, and in Aspect 1, radio resources of the discovery signal are further subjected to TDM for each cell. In addition, not limited to the discovery signal, it may be configured to perform TDM on another D2D signal based on Aspect 1.

Herein, as a plurality of cells with different cell radiuses, for example, the plurality of cells may be a plurality of cells meeting the condition that the absolute value $\Delta R$ of the difference of the cell radius is a predetermined value or more (for example, 1 m or more, 10 m or more, 100 m or more and the like). Further, a plurality of cells that a value obtained by dividing $\Delta R$ by the speed of light c is a predetermined value or more may be judged to have different cell radiuses.

Further, a plurality of cells with different configurations (for example, performance of the radio base station forming the cell is different) such as a macrocell, small cell and picocell may be judged to have different cell radiuses. By this means, for example, it is possible to perform TDM on discovery signals of a D2D terminal existing in a macrocell and a D2D terminal existing in a small cell adjacent to the macrocell.

FIG. 6 contains schematic diagrams of a D2D resource group allocated to the discovery signal in Aspect 1 of this Embodiment. FIG. 6A is a schematic diagram of TDM of the discovery signal for each cell according to Aspect 1. In FIG. 6A, TDM is performed on resource regions to respectively transmit three signals including a cellular signal (WAN) transmitted/received to/from the radio base station, macrocell discovery signal used in the D2D terminal existing in the macrocell, and small-cell discovery signal used in the D2D terminal existing in the small cell.

As a resource group allocation method for the discovery signal in Aspect 1, it is possible to use a configuration (Aspect 1.1) for dividing into resources for transmission/reception to allocate, and another configuration (Aspect 1.2) for dividing into resources for intra-cell/inter-cell to allocate. Each of the Aspects will be described below.

FIG. 6B illustrates a schematic diagram of a D2D resource group allocated to the discovery signal in Aspect 1.1. A specific resource in the figure is a resource for enabling the D2D terminal existing in the cell to transmit the discovery signal. The specific resource is allocated to different resources by applying TDM for each cell. Further, a common resource is a resource for enabling a D2D terminal in each cell to receive the discovery signal. In addition, as shown in FIG. 6B, the specific resource may be overlaid on a region of a part of the common resource.

FIG. 6C illustrates a schematic diagram of a D2D resource group allocated to the discovery signal in Aspect 1.2. An intra-cell resource in the figure is a resource for enabling a user terminal existing (inside the cell) to transmit the discovery signal in the predetermined cell.

Further, an inter-cell resource is a resource for enabling a user terminal existing out of the cell (inside another cell) to transmit the discovery signal in the predetermined cell. The intra-cell resource and inter-cell resource are allocated to different resources by applying TDM.

In addition, as a result of sorting a plurality of cells with different cell radiuses, when there are three or more cell groups, D2D resources may be subjected to TDM for the three or more cell groups. For example, when three cell groups with large, middle and small cell radiuses exist, D2D resources may be divided into the intra-cell resource, first inter-cell resource and second inter-cell resource to perform TDM.

FIG. 7 is a diagram showing one example of the D2D resource group allocated to the discovery signal in Aspect 1.2. In FIG. 7, two macrocells (macrocells 1 and 2) are adjacent to each other, and four small cells (small cells 1 to 4) are included and disposed inside the macrocells. For example, as shown in the lower part of FIG. 7, it is assumed that TDM is performed so as to transmit the intra-cell resource (D2D-intra) of the macrocells 1 and 2 at earlier timing than the inter-cell resource (D2D-inter). In this case, the intra-cell resource of the macrocell is the inter-cell resource for each small cell. Further, the inter-cell resource of the macrocell is the intra-cell resource for each small cell. Therefore, TDM is performed so as to transmit the inter-cell resource of the small cells 1 to 4 at earlier timing than the intra-cell resource.

Further, in both of Aspect 1.1 and Aspect 1.2, it is possible to configure so that each transmission timing (for example, subframe) includes discovery signals transmitted from a plurality of D2D terminals of a cell group (cell group judged as that the cell radius is not different) such that the cell radius is substantially the same.

(Signaling to the D2D terminal)

The radio base station notifies user terminals inside the cell of information on the D2D resource group allocated to the discovery signal. The notification may be called the resource allocation signal. The resource allocation signal may be notified using one of downlink control information (DCI) with the downlink control channel (PDCCH: Physical Downlink Control Channel, EPDCCH: Enhanced PDCCH), higher layer signaling (for example, RRC signaling) and broadcast signal (for example, SIB).

In Aspect 1.1, the D2D terminal may be notified of information on each of the specific resource and common resource. Further, a configuration may be made to omit notification of the information on the common resource. In this case, for example, it is possible to judge a resource to which WAN is not allocated as the common resource.

In Aspect 1.2, the D2D terminal may be notified of information on each of the intra-cell resource and inter-cell resource. Further, a configuration may be made to omit notification of the information on one of the resources. In this case, for example, among resources to which WAN is not allocated, it is possible to judge a resource except the D2D resource indicated by the notified information as the other D2D resource.

In addition, as a method of designating transmission resources for the discovery signal, Type 1 (collision type) and Type 2 (non-collision type) are studied, and both of the types are applicable to this Embodiment. In Type 1, the radio base station notifies the D2D terminal of candidates for resources for enabling the discovery signal to be mapped i.e. resource group, and each D2D terminal determines randomly a transmission resource of the terminal from the candidates. Further, in Type 2, the radio base station notifies the D2D terminal of a resource selected from candidates for resources for enabling the discovery signal to be mapped, and each D2D terminal transmits the discovery signal in the designated transmission resource. For example, it is possible to use the specific resource in Aspect 1.1, the intra-cell resource in Aspect 1.2 and the like as allocation candidates.

(Signaling of assistance information to the D2D terminal) In Aspect 1, the resource allocation signal concerning the inter-cell resource may further include assistance information on reception of the discovery signal between cells. For example, by notifying of information on a difference in the cell radius as the assistance information, it is possible to reduce the difference in receiving reference timing between cells. A specific example will be described below with reference to FIG. 8.

FIG. 8 is a diagram showing one example in the case of reducing the difference in receiving reference timing between cells using the assistance information. For example, the intra-cell resources (D2D-intra) and inter-cell resources (D2D-inter) of the macrocell and small cell are set as shown in the figure. As information on these D2D resources allocated to the discovery signal, the eNB transmits the resource allocation signal to the UE1, while the SeNB transmits the resource allocation signal to the UE2. Further, the resource allocation signal includes $\Delta T$ ($=\Delta R/c$) that is the maximum value of the difference in receiving reference timing between cells as the assistance information.

Each D2D terminal (UE1, UE2) receiving the resource allocation signal including ΔT shifts reception processing start timing (DL timing) of the discovery signal based on ΔT for the inter-cell resource (D2D-inter). In other words, the D2D terminal inside the macrocell recognizes that receiving reference timing of the terminal is larger than receiving reference timing of the D2D terminal inside the small cell by ΔT, and changes reception processing start timing of D2D-inter to DL timing-ΔT. On the other hand, the D2D terminal inside the small cell recognizes that receiving reference timing of the terminal is smaller than receiving reference timing of the D2D terminal inside the macrocell by ΔT, and changes reception processing start timing of D2D-inter to DL timing+ΔT.

In addition, the D2D terminal may determine whether to add or subtract ΔT to/from reception processing start timing of D2D-inter, based on information on the cell where the terminal exists. Further, the D2D terminal may be configured to perform predetermined calculation on reception processing start timing of D2D-inter using a value included in the notified assistance information, and the included value may be configured to be +ΔT or -ΔT.

Further, instead of ΔT, ΔR that is an absolute value of the difference in the cell radius, information (for example, R1, R2) on the radius of each cell and the like may be notified as the assistance information, and the D2D terminal may calculate ΔT. Further, it may be configured that the distance between each radio base station and the D2D terminal is notified as the assistance information to adjust the reception processing start timing.

In addition, the assistance information may be not included in the resource allocation signal and be notified to the D2D terminal as a different signal. For example, the assistance information may be notified using one of the downlink control channel, higher layer signaling and broadcast signal.

(Inter-base station signaling)

In Aspect 1, in order to perform TDM on the resource group of the discovery signal allocated to the D2D terminal of each cell, it is necessary to exchange information on adjustments of D2D resource allocation by inter-base station signaling. It is possible to transmit and receive the inter-base station signaling via inter-base station interface (for example, optical fiber, X2 interface) or radio.

FIG. 9 is a sequence diagram in the case where a macro base station performs D2D resource group allocation of the discovery signal. In this case, first, the small base station SeNB notifies the macro base station MeNB of a D2D resource configuration request (step S11). The MeNB receiving the D2D resource configuration request allocates an available D2D resource group (step S12). Then, the MeNB notifies of a D2D resource configuration response including information (D2D resource configuration) on the allocated D2D resource group (step S 13). In addition, the MeNB is capable of allocating the resource group used in the discovery signal inside the macrocell from D2D resources that are not allocated to the small cell.

FIG. 10 is a sequence diagram in the case where the macro base station and small base station perform D2D resource group allocation of the discovery signal in cooperation with each other. In this case, first, the SeNB notifies the macro base station MeNB of D2D resource configuration update including a D2D resource configuration of the discovery signal desired to use in the small cell (step S21). The MeNB receiving the D2D resource configuration update determines whether or not there is a resource group that duplicates the D2D resource group indicated by the D2D resource configuration update (step S22). When the duplicate resource group does not exist (step S22-NO), the MeNB sets the D2D resource group at the inter-cell resource, and notifies the SeNB of D2D resource configuration confirm (step S23).

On the other hand, when the duplicate resource exists (step S22-YES), the MeNB notifies the SeNB of D2D resource configuration reject (step S24). The SeNB receiving the D2D resource configuration reject may determine another D2D resource configuration again to execute step S21. Further, in step S24, it is possible to make a configuration where the MeNB allocates a D2D resource group used in the discovery signal inside the small cell to notify the SeNB together with the D2D resource configuration reject or by another signaling, and that the SeNB uses the notified D2D resource group.

In addition, the MeNB notifies the SeNB of D2D resource configuration update including the D2D resource configuration of the discovery signal desired to use in the macrocell, and the like, and thus, a configuration may be made where processing is executed by replacing standpoints of the MeNB and SeNB with each other in FIG. 9.

Further, in Aspect 1, in order to use the assistance information on the difference in the cell radius, the base stations need to notify each other of the cell radius. The information on the cell radius may be notified to the radio base station for forming the adjacent cell, or as in D2D resource configuration request/response in FIG. 9, may be notified between radio base stations individually by request/response signaling.

In the former case, for example, the macro base station broadcasts information on the cell radius of the macrocell by radio, and the small base station included inside the coverage area of the macrocell receives the information, and is thereby capable of acquiring the cell radius of the macrocell.

In the latter case, for example, the small base station notifies the adjacent macro base station of a cell radius request. The macro base station receiving the cell radius request notifies the small base station of a cell radius response including the cell radius of the macrocell. In addition, the small base station may include the cell radius of the small cell in the cell radius request. Further, it may be configured that the macro base station notifies the small base station of the cell radius request, and that the small base station returns the cell radius response.

Moreover, the radio base station may be beforehand set for the information on the cell radius of the adjacent cell and difference in the cell radius. For example, when the small base station is installed while being overlaid on the coverage area of the macrocell, it is possible to make a configuration where the small base station has the information on the cell radius of the macrocell in installation.

As described above, according to Aspect 1 of the radio communication method according to this Embodiment, the D2D resource group according to transmission of the discovery signal is subjected to time division multiplexing for a plurality of cells with different cell radiuses and allocated. By this means, in transmission and reception of the discovery signal between cells with different cell radiuses, it is possible to decrease the effect of the deviation in synchronization of transmission/reception timing, and to suppress reduction in throughput of the entire system.

(Aspect 2)

Aspect 2 of the radio communication method according to this Embodiment is to change transmission timing of the synchronization source signal from the radio base station for each cell. By this means, it is possible to make timing at which a D2D terminal positioned near the cell edge receives the synchronization source signal substantially the same in each cell.

FIG. 11 is an explanatory diagram illustrating a processing flow in Aspect 2 of this Embodiment. First, in Aspect 2, each radio base station acquires the cell radius of the other radio base station. In FIG. 11, using the cell radius request/response as described above concerning the assistance information of Aspect 1, the macro base station eNB and small base station SeNB share the information on the cell radius.

Specifically, the SeNB notifies the MeNB of a cell radius request (step S31). The MeNB receiving the cell radius request notifies the SeNB of a cell radius response including the cell radius R1 of the macrocell (step S32).

The MeNB transmits the synchronization source signal at predetermined timing $T_0$ (step S33). On the other hand, the SeNB calculates an absolute value $\Delta R$ (=|R1-R2|) of a difference in the cell radius based on R1 included in the cell radius response and radius R2 (R2<R1) of the small cell formed by the SeNB. Further, based on $\Delta R$, the SeNB calculates delay time $\Delta T$ (=$\Delta R/c$) to apply to the synchronization source signal. Then, the SeNB transmits the synchronization source signal at timing obtained by adding the delay time $\Delta T$ to the predetermined timing $T_0$ (step S34).

UE1 and UE2 receiving the synchronization source signal execute transmission/reception processing of the discovery signal (step S35). In this example, reception timing of the discovery signal in the UE1 and UE2 deviates from receiving reference timing based on the MeNB and SeNB respectively by Timing offset shown in the following (Equation 3) and (Equation 4). In addition, both of the ranges of possible values of (Equation 3) and (Equation 4) are [0, 2D/c], and are the same as the range of possible values of (Equation 1) in the case where two D2D terminals exist in the same cell.

$$\text{Timing offset} = (D+D2-D1)/c + \Delta T \quad \cdots \text{(Equation 3)}$$

$$\text{Timing offset} = (D+D1-D2)/c - \Delta T \quad \cdots \text{(Equation 4)}$$

In addition, in Aspect 2, as in the example shown in FIG. 11, the configuration for changing transmission timing of the synchronization source signal of the SeNB is preferable. Particularly, in the case where the macrocell includes a plurality of small cells with different radiuses, a configuration is preferable where the MeNB shifts transmission timing of the synchronization source signal of the SeNB. In this case, since the MeNB does not need to be notified of the cell radius of the small cell, as compared with the case of mutually notifying of the cell radius between radio base stations, it is possible to reduce communication amounts of backhaul channels.

In addition, the present invention is not limited thereto. For example, in the example of FIG. 11, it is possible that the MeNB transmits the synchronization source signal at timing $T_0$-$\Delta T$, and that the SeNB transmits the synchronization source signal at predetermined timing $T_0$.

As described above, according to Aspect 2 of the radio communication method according to this Embodiment, transmission timing of the synchronization source signal from the radio base station is changed for each cell. By this means, it is possible to decrease the effect of the deviation in synchronization of transmission/reception timing between cells with different cell radiuses, and to suppress reduction in throughput of the entire system.

In addition, a configuration may be made where Aspect 1 and Aspect 2 are switched as appropriate to apply. For example, the radio base station may switch the Aspect based on the number of D2D terminals under control thereof, or may switch the Aspect corresponding to a level of radio wave interference with another radio base station.

(Configuration of the radio communication system)

A configuration of the radio communication system according to this Embodiment will be described below. In the radio communication system, the radio communication method according to the above-mentioned Aspect 1 and/or Aspect 2 is applied.

FIG. 12 is a schematic configuration diagram showing one example of the radio communication system according to this Embodiment. As shown in FIG. 12, the radio communication system 1 is provided with a plurality of radio base stations 10 (11 and 12), and a plurality of user terminals 20 which is present inside a cell formed by each radio base station 10 and is configured to be able to communicate with each radio base station 10. Each of the radio base stations 10 is connected to a higher station apparatus 30, and is connected to a core network 40 via the higher station apparatus 30.

In FIG. 12, for example, the radio base station 11 is comprised of a macro base station having relatively wide coverage, and forms a macrocell C1. The radio base station 12 is comprised of a small base station having local coverage, and forms a small cell C2. In addition, the numbers of radio base stations 11 and 12 are not limited to the numbers as shown in FIG. 12.

In the macrocell C1 and small cell C2, the same frequency band may be used, or different frequency bands may be used. Further, the radio base stations 11 and 12 are mutually connected via inter-base station interface (for example, optical fiber, X2 interface).

In addition, the macro base station 11 may be called eNodeB (eNB), radio base station, transmission point and the like. The small base station 12 may be called RRH (Remote Radio Head), pico-base station, femto-base station, Home eNodeB, transmission point, eNodeB (eNB) and the like.

The user terminal 20 is a terminal supporting various types of communication schemes such as LTE and LTE-A, and may include a fixed communication terminal as well as the mobile communication terminal. The user terminal 20 is capable of performing communications with another user terminal 20 via the radio base station 10. Further, the user terminal 20 is capable of performing direct communications (D2D) with another user terminal 20 by bypassing the radio base station 10. In other words, the user terminal is the D2D terminal, and has the function of directly transmitting and receiving inter-terminal signals (D2D signals) for D2D discovery, D2D synchronization, D2D communication and the like. In addition, the D2D signal is assumed to be based on SC-FDMA (Single Carrier-Frequency Division Multiple Access) as a basic signal format, but is not limited thereto.

For example, the higher station apparatus 30 includes an access gateway apparatus, Radio Network Controller (RNC), Mobility Management Entity (MME) and the like, but is not limited thereto.

As downlink channels, in the radio communication system 1 are used a downlink shared channel (PDSCH: Physical Downlink Shared Channel) shared by user terminals 20, downlink control channels (PDCCH: Physical Downlink Control Channel, EPDCCH: Enhanced Physical Downlink Control Channel), broadcast channel (PBCH: Physical Broadcast Channel) and the like. User data, higher layer control information, and predetermined SIB (System Information Block) are transmitted on the PDSCH. Downlink control information (DCI) is transmitted on the PDCCH and EPDCCH. Further, synchronization signals, MIB (Master Information Block) and the like are transmitted on the PBCH.

As uplink channels, in the radio communication system 1 are used an uplink shared channel (PUSCH: Physical Uplink Shared Channel) shared by user terminals 20, uplink control channel (PUCCH: Physical Uplink Control Channel) and the like. User data and higher layer control information is transmitted on the PUSCH. Further, in the radio communication system 1, using uplink resources, discovery signals to mutually detect terminals are transmitted between user terminals 20.

FIG. 13 is an entire configuration diagram of the radio base station 10 according to this Embodiment. The radio base station 10 is provided with a plurality of transmission/reception antennas 101 for MIMO transmission, amplifying sections 102, transmission/reception sections 103, baseband signal processing section 104, call processing section 105, and transmission path interface 106.

User data to transmit to the user terminal 20 from the radio base station 10 on downlink is input to the baseband signal processing section 104 from the higher station apparatus 30 via the transmission path interface 106.

The baseband signal processing section 104 performs, on the input user data, processing of PDCP layer, segmentation and concatenation of the user data, transmission processing of RLC (Radio Link Control) layer such as transmission processing of RLC retransmission control, MAC (Medium Access Control) retransmission control (for example, transmission processing of HARQ (Hybrid ARQ)), scheduling, transmission format selection, channel coding, Inverse Fast Fourier Transform (IFFT) processing, and precoding processing to transfer to each of the transmission/reception sections 103. Further, also concerning a downlink control signal, the section 104 performs transmission processing such as channel coding and Inverse Fast Fourier Transform on the signal to transfer to each of the transmission/reception sections 103.

Each of the transmission/reception sections 103 converts the downlink signal, which is subjected to precoding for each antenna and is output from the baseband signal processing 104, into a signal with a radio frequency band. Further, the transmission/reception sections 103 constitute a transmission section according to this Embodiment. The amplifying sections 102 amplify the radio-frequency signal subjected to frequency conversion, and transmit from the transmission/reception antennas 101.

On the other hand, for an uplink signal, a radio-frequency signal received in each of the transmission/reception antennas 101 is amplified in respective one of the amplifying sections 102, is subjected to frequency conversion in respective one of the reception sections 103 and is thereby converted into a baseband signal, and the signal is input to the baseband signal processing section 104.

For user data included in the input uplink signal, the baseband signal processing section 104 performs Fast Fourier Transform (FFT) processing, Inverse Discrete Fourier Transform (IDFT) processing, error correcting decoding, reception processing of MAC retransmission control, and reception processing of RLC layer and PDCP layer to transfer to the higher station apparatus 30 via the transmission path interface 106. The call processing section 105 performs call processing such as setting and release of a communication channel, state management of the radio base station 10, and management of radio resources.

The transmission path interface 106 transmits and receives (backhaul signaling) signals to/from an adjacent radio base station via the inter-base station interface (for example, optical fiber, X2 interface). Further, the transmission path interface 106 transmits and receives signals to/from the higher station apparatus 30 via a predetermined interface.

FIG. 14 is a principal function configuration diagram of the baseband signal processing section 104 that the radio base station 10 has according to this Embodiment. As shown in FIG. 14, the baseband signal processing section 104 that the radio base station 10 has includes at least a control section 301, transmission signal generating section 302, mapping section 303, demapping section 304, and received signal decoding section 305 to be comprised thereof.

The control section 301 controls scheduling of the downlink user data transmitted on the PDSCH, and the downlink control information, downlink reference signal and the like transmitted on both or one of the PDCCH and Enhanced PDCCH (EPDCCH). Further, the control section 301 performs control (assignment control) of scheduling of RA preamble transmitted on the PRACH, uplink data transmitted on the PUSCH, and uplink control information and uplink reference signal transmitted on the PUCCH or PUSCH. Information on the assignment control of the uplink signal (uplink control signal, uplink user data) is notified to the user terminal 20 using the downlink control signal (DCI).

The control section 301 controls the allocation of radio resources to the downlink signal and uplink signal, based on instruction information from the higher station apparatus 30 and feedback information from each user terminal 20. In other words, the control section 301 has a function as a scheduler. In addition, when another radio base station 10 or the higher station apparatus 30 functions as a centralized scheduler for a plurality of radio base stations 10, the control section 301 may omit the function as a scheduler.

The control section 301 controls the transmission signal generating section 302 and mapping section 303 so as to notify the user terminal 20 of a control signal according to transmission/reception of the D2D signal.

Specifically, using higher layer signaling or broadcast signal, the control section 301 controls so as to notify the user terminal 20 of the system information including at least the D2D resource information. For example, the control section 301 includes synchronization state information of a frequency carrier for the user terminal 20 to perform D2D signal transmission/reception and a frequency carrier to control D2D signal transmission/reception for the user terminal 20 in the system information and controls so as to notify the user terminal 20. Further, the control section 301 broadcasts the system information block (SIB), and thereby notifies the D2D terminal inside the area of allocation information of the D2D resource group.

Further, the control section 301 controls to transmit synchronization source signals (for example, PSS/SSS, CRS and the like) for the user terminal 20 to use as a synchronization reference of transmission/reception timing of the D2D signal.

The control section 301 executes control according to resource allocation, so as to decrease the effect of the deviation in synchronization of transmission/reception timing of the D2D signal due to the difference in the cell radius between the cell formed by the station thereof and the cell formed by another radio base station 10.

Specifically, the control section 301 controls to generate the resource allocation information for the user terminal 20 to perform time division multiplexing (TDM) on the D2D resource allocated to the discovery signal for a plurality of cells with different cell radiuses to map to notify (Aspect 1).

The control section 301 may be configured to divide the TDM into the specific/common resources that are resources for enabling the D2D terminal to transmit/receive the discovery signal (Aspect 1.1). Further, the control section 301 may be configured to divide the TDM into the intra-cell/inter-cell resources that are resources for enabling each of user terminals 20 inside and outside the cell formed by radio base station 10 including the control section 301 to transmit (Aspect 1.2).

Further, the control section 301 may control to change transmission timing of the synchronization source signal for each cell (Aspect 2). For example, the section delays the synchronization source signal by a time calculated based on an absolute value of the difference in the cell radius to transmit.

According to the above-mentioned configuration, for example, the control section 301 is capable of controlling the contents of the information (resource allocation information) on the D2D resource allocated to the discovery signal or transmission timing of the synchronization source signal, so that using the receiving reference timing as a reference, the range of possible values of the time difference between the reference and reception timing of the discovery signal is the same as the range of possible values of Timing offset in the case of regarding the cell formed by the station thereof and the cell formed by another radio base station 10 as a single cell in the user terminal 20. In addition, also on the aforementioned assumption that two cells are regarded as a single cell, each user terminal 20 uses the synchronization source signal from the radio base station 10 forming the cell where each terminal exists, as a reference.

Via the transmission path interface 106, the control section 301 transmits and receives signaling for resource adjustments of the discovery signal assigned to the D2D terminal of each cell and signaling to change transmission timing of the synchronization source signal to/from another radio base station 10 and higher station apparatus 30. As the former signaling, for example, it is possible to use D2D resource configuration response/request, D2D resource configuration update, D2D resource configuration confirm, D2D resource configuration reject and the like.

Further, via the transmission path interface 106, the control section 301 is capable of controlling so as to acquire the cell radius of the cell formed by another radio base station 10, and notify another radio base station 10 of the cell radius of the cell formed by the station thereof.

The transmission signal generating section 302 generates a downlink control signal, downlink data signal, downlink reference signal and the like such that assignment is determined by the control section 301 to output to the mapping section 303. Specifically, based on instructions from the control section 301, the transmission control signal generating section 302 generates DL assignment for notifying of downlink signal assignment information and UL grant for notifying of uplink signal assignment information. Further, the downlink data signal is subjected to coding processing and modulation processing according to a coding rate and modulation scheme determined based on CSI from each user terminal 20 and the like.

Further, based on instructions from the control section 301, the transmission signal generating section 302 may generate the information on the D2D resource allocated to the discovery signal as the downlink control information (DCI) on the downlink control channel (PDCCH, EPDCCH), or may generate as higher layer signaling (for example, RRC signaling) and broadcast signal (for example, SIB). Furthermore, the transmission signal generating section 302 may generate the assistance information on reception of the discovery signal between cells, such as the information on the difference in the cell radius.

Based on instructions from the control section 301, the mapping section 303 maps the downlink signal generated in the transmission signal generating section 302 to radio resources to output to the transmission/reception sections 103.

The demapping section 304 demaps the signal received in the transmission/reception section 103, and outputs divided signals to the received signal decoding section 305. Specifically, the demapping section 304 demaps an uplink signal transmitted from the user terminal 20.

The received signal decoding section 305 decodes the signal (for example, receipt confirmation signal) transmitted from the user terminal on the uplink control channel (PRACH, PUCCH) to output to the control section 301.

FIG. 15 is an entire configuration diagram of the user terminal 20 according to this Embodiment. As shown in FIG. 15, the user terminal 20 is provided with a plurality of transmission/reception antennas 201 for MIMO transmission, amplifying sections 202, transmission/reception sections (reception section) 203, baseband signal processing section 204, and application section 205.

For downlink data, radio-frequency signals received in a plurality of transmission/reception antennas 201 are respectively amplified in the amplifying sections 202, and are subjected to frequency conversion in the transmission/reception sections 203 to be baseband signals. The baseband signal is subjected to FFT processing, error correcting decoding, reception processing of retransmission control and the like in the baseband signal processing section 204. Among the downlink data, downlink user data is transferred to the application section 205. The application section 205 performs processing concerning layers higher than physical layer and MAC layer, and the like. Further, among the downlink data, broadcast information is also transferred to the application section 205.

On the other hand, for uplink user data, the data is input to the baseband signal processing section 204 from the application section 205. The baseband signal processing section 204 performs transmission processing (for example, transmission processing of HARQ) of retransmission control, channel coding, precoding, Discrete Fourier Transform (DFT) processing, IFFT processing and the like to transfer to each of the transmission/reception sections 203. Each of the transmission/reception sections 203 converts the baseband signal output from the baseband signal processing section 204 into a signal with a radio frequency band. Subsequently, each of the amplifying sections 202 amplifies the radio-frequency signal subjected to frequency conversion to transmit from respective one of the transmission/reception antennas 201.

The transmission/reception section 203 receives the system information including at least the D2D signal transmission/reception resource information transmitted from the radio base station 10 to which the terminal is connected or where the terminal exists. The transmission/reception section 203 transmits the signal using a part of the designated D2D resource group in the designated frequency carrier. The transmission/reception section 203 receives a signal transmitted from another user terminal 20 from among the D2D signal transmission/reception resources. Further, the transmission/reception sections 203 constitute a reception section according to this Embodiment.

FIG. 16 is a principal function configuration diagram of the baseband signal processing section 204 that the user terminal 20 has. As shown in FIG. 16, the baseband signal processing section 204 that the user terminal 20 has includes at least a control section 401, transmission signal generating section 402, mapping section 403, demapping section 404, and received signal decoding section 405 to be comprised thereof.

Based on the downlink control signal (PDCCH signal) transmitted from the radio base station 10 and a result obtained by determining whether or not to allow retransmission control for the received PDSCH signal, the control section 401 controls generation of an uplink control signal (HARQ-ACK signal and the like) and uplink data signal. The downlink control signal received from the radio base station is output from the received signal decoding section 405.

Further, based on the D2D resource information notified from the radio base station 10, the control section 401 controls resource mapping of the D2D signal. Based on the system information and synchronization source signal, the control section 401 controls synchronization of D2D resources.

Furthermore, based on the information (resource allocation information) on the D2D resource allocated to the discovery signal notified from the radio base station 10, the control section 401 performs control for mapping the D2D resource for transmission of the discovery signal, so as to decrease the effect of the deviation in synchronization of transmission/reception timing of the D2D signal due to the difference in the cell radius.

Specifically, the control section 401 controls so as to perform time division multiplexing (TDM) on the D2D resource allocated to the discovery signal for a plurality of cells with different cell radiuses to map (Aspect 1). For example, based on the information on the specific resource and/or common resource, the control section 401 may divide the discovery signal into the specific/common resources to map (Aspect 1.1). Further, based on the information on the intra-cell resource and/or inter-cell resource, the control section 401 may divide into intra-cell/inter-cell resources that are resources for enabling the user terminal inside/outside the cell formed by the radio base station 10 where the terminal exists to transmit (Aspect 1.2).

The control section 401 may output information on reception processing start timing of each resource to the received signal decoding section 405. Further, based on the assistance information on reception of the discovery signal between cells, the control section 401 is capable of controlling so as to change reception processing start timing of the inter-cell resource. In this case, the control section 401 outputs acquired or calculated information on reception processing start timing of the inter-cell resource to the received signal decoding section 405.

Based on instructions from the control section 401, the transmission signal generating section 402 generates uplink control signals such as the receipt confirmation signal (HARQ-ACK) and channel state information (CSI). Further, based on instructions from the control section 401, the transmission signal generating section 402 generates an uplink data signal. In addition, when an UL grant is included in the downlink control signal notified from the radio base station, the control section 401 instructs the transmission signal generating section 402 to generate an uplink data signal. Further, the transmission signal generating section 402 generates the D2D signal such as the discovery signal.

Based on instructions from the control section 401, the mapping section 403 maps the uplink signal generated in the transmission signal generating section 402 to radio resources to output to the transmission/reception sections 203. Further, based on instructions from the control section 401, the mapping section 403 controls mapping of the signal in D2D signal transmission/reception to the D2D resource.

The demapping section 404 demaps the signal received in the transmission/reception section 203, and outputs the divided signals to the received signal decoding section 405. Specifically, the demapping section 404 demaps a downlink signal transmitted from the radio base station 10. Further, the demapping section 404 demaps the D2D signal transmitted from another user terminal 20.

The received signal decoding section 405 decodes the downlink control signal (PDCCH signal) transmitted on the downlink control channel (PDCCH), and outputs scheduling information (information on assignment to uplink resources), information on the cell to transmit a receipt confirmation signal on the downlink control signal as feedback and the like to the control section 401. Further, based on the information on reception processing start timing of each resource output from the control section 401, the received signal decoding section 405 decodes the D2D signal. Furthermore, when the control section 401 inputs the information on reception processing start timing of the inter-cell resource, the received signal decoding section 405 may change the reception processing start timing based on the information.

As described above, the present invention is specifically described using the above-mentioned Embodiment, but it is obvious to a person skilled in the art that the invention is not limited to the Embodiment described in the Description. The invention is capable of being carried into practice as modified and changed aspects without departing from the subject matter and scope of the invention defined by the descriptions of the scope of the claims. Accordingly, the descriptions of the Description are intended for illustrative explanation, and do not have any restrictive meaning to the invention.

The present application is based on Japanese Patent Application No. 2014-015823 filed on January 30, 2014, entire content of which is expressly incorporated by reference herein.

## Claims

1. A user terminal capable of transmitting an inter-terminal discovery signal to another user terminal under control of a different cell from a cell where the user terminal exists, comprising:

   a reception section that receives a signal including resource allocation information of the inter-terminal discovery signal and a predetermined downlink signal used in synchronization of transmission/reception timing of the inter-terminal discovery signal, which are transmitted from a radio base station for forming the cell where the user terminal exists; and
   a control section that controls transmission/reception timing of the inter-terminal discovery signal based on the resource allocation information and reception timing of the predetermined downlink signal,

   wherein the control section maps a resource for transmission of the inter-terminal discovery signal so as to perform time division multiplexing for a plurality of cells with different cell radiuses.

2. The user terminal according to claim 1, wherein the resource allocation information of the inter-terminal discovery signal includes information on a common resource for reception and a specific resource for transmission.

3. The user terminal according to claim 1, wherein the resource allocation information of the inter-terminal discovery signal includes information on an intra-cell resource for enabling a user terminal inside the cell where the user terminal exists to transmit, and an inter-cell resource for enabling a user terminal outside the cell where the user terminal exists to transmit.

4. The user terminal according to claim 3, wherein the reception section receives assistance information on a difference in a cell radius between the cell where the user terminal exists and the different cell, and based on the assistance information, the control section controls to change reception processing start timing of the discovery signal according to the inter-cell resource.

5. The user terminal according to any one of claims 1 to 4, wherein the signal including the resource allocation information of the inter-terminal discovery signal is transmitted from the radio base station, using one of a downlink control channel, higher layer signaling and a broadcast signal.

6. A user terminal capable of transmitting an inter-terminal discovery signal to another user terminal under control of a different cell from a cell where the user terminal exists, comprising:

   a reception section that receives a signal including resource allocation information of the inter-terminal discovery signal and a predetermined downlink signal used in synchronization of transmission/reception timing of the inter-terminal discovery signal, which are transmitted from a radio base station for forming the cell where the user terminal exists; and
   a control section that controls transmission/reception timing of the inter-terminal discovery signal based on the resource allocation information and reception timing of the predetermined downlink signal,

   wherein transmission timing of the predetermined downlink signal is adjusted, based on a difference in a cell radius between the cell where the user terminal exists and the different cell.

7. A radio base station that communicates with a user terminal capable of transmitting an inter-terminal discovery signal to another user terminal under control of a different cell from a formed cell, comprising:

   a transmission section that transmits a signal including resource allocation information of the inter-terminal discovery signal, and a predetermined downlink signal used in synchronization of transmission/reception timing of the inter-terminal discovery signal to the user terminal under control of the formed cell; and
   a control section that controls the resource allocation information or transmission timing of the predetermined downlink signal,

wherein the control section controls to generate the resource allocation information indicating that a resource for transmission of the inter-terminal discovery signal is subjected to time division multiplexing for a plurality of cells with different cell radiuses and allocated.

**8.** A radio communication method in a user terminal capable of transmitting an inter-terminal discovery signal to another user terminal under control of a different cell from a cell where the user terminal exists, comprising:

receiving a signal including resource allocation information of the inter-terminal discovery signal and a predetermined downlink signal used in synchronization of transmission/reception timing of the inter-terminal discovery signal, which are transmitted from a radio base station for forming the cell where the user terminal exists; and
controlling transmission/reception timing of the inter-terminal discovery signal based on the resource allocation information and reception timing of the predetermined downlink signal,

wherein a resource for transmission of the inter-terminal discovery signal is mapped so as to perform time division multiplexing for a plurality of cells with different cell radiuses.

**9.** A radio communication system including a user terminal capable of transmitting an inter-terminal discovery signal to another user terminal under control of a different cell from a cell where the user terminal exists, and a radio base station for forming the cell where the user terminal exists to communicate with the user terminal,
wherein the radio base station has a transmission section that transmits a signal including resource allocation information of the inter-terminal discovery signal, and a predetermined downlink signal used in synchronization of transmission/reception timing of the inter-terminal discovery signal to the user terminal, and
a control section that controls the resource allocation information or transmission timing of the predetermined downlink signal,
the user terminal has a reception section that receives a signal including the resource allocation information, and the predetermined downlink signal, and
a control section that controls transmission/reception timing of the inter-terminal discovery signal based on the resource allocation information and reception timing of the predetermined downlink signal, and
the control section of the radio base station controls to generate the resource allocation information indicating that a resource for transmission of the inter-terminal discovery signal is subjected to time division multiplexing for a plurality of cells with different cell radiuses and allocated.

FIG.1A

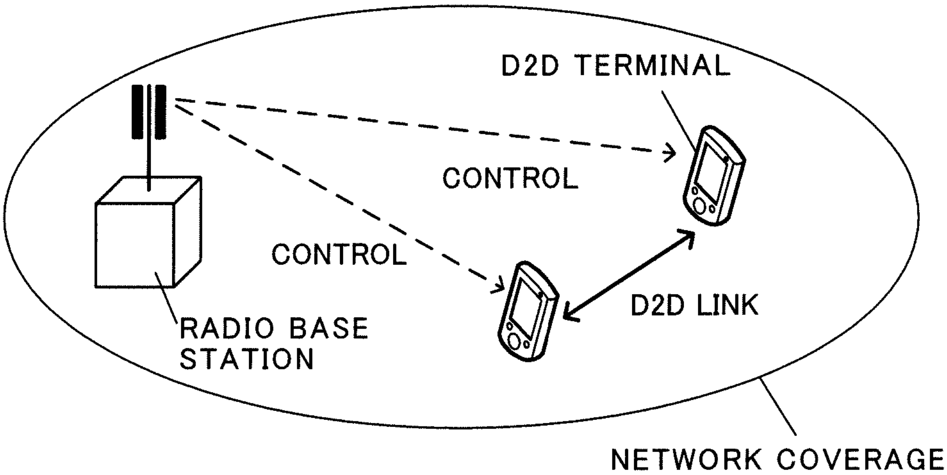


FIG.1B

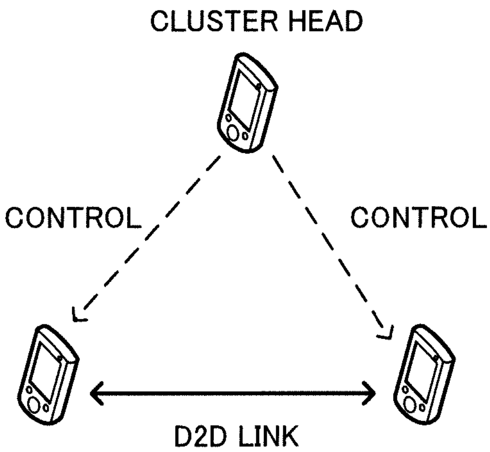


FIG.1C

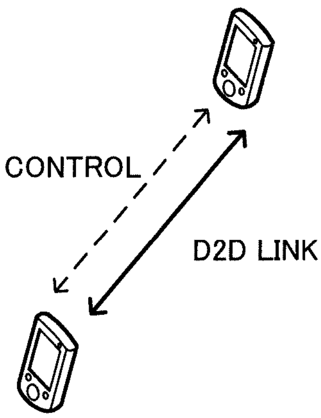

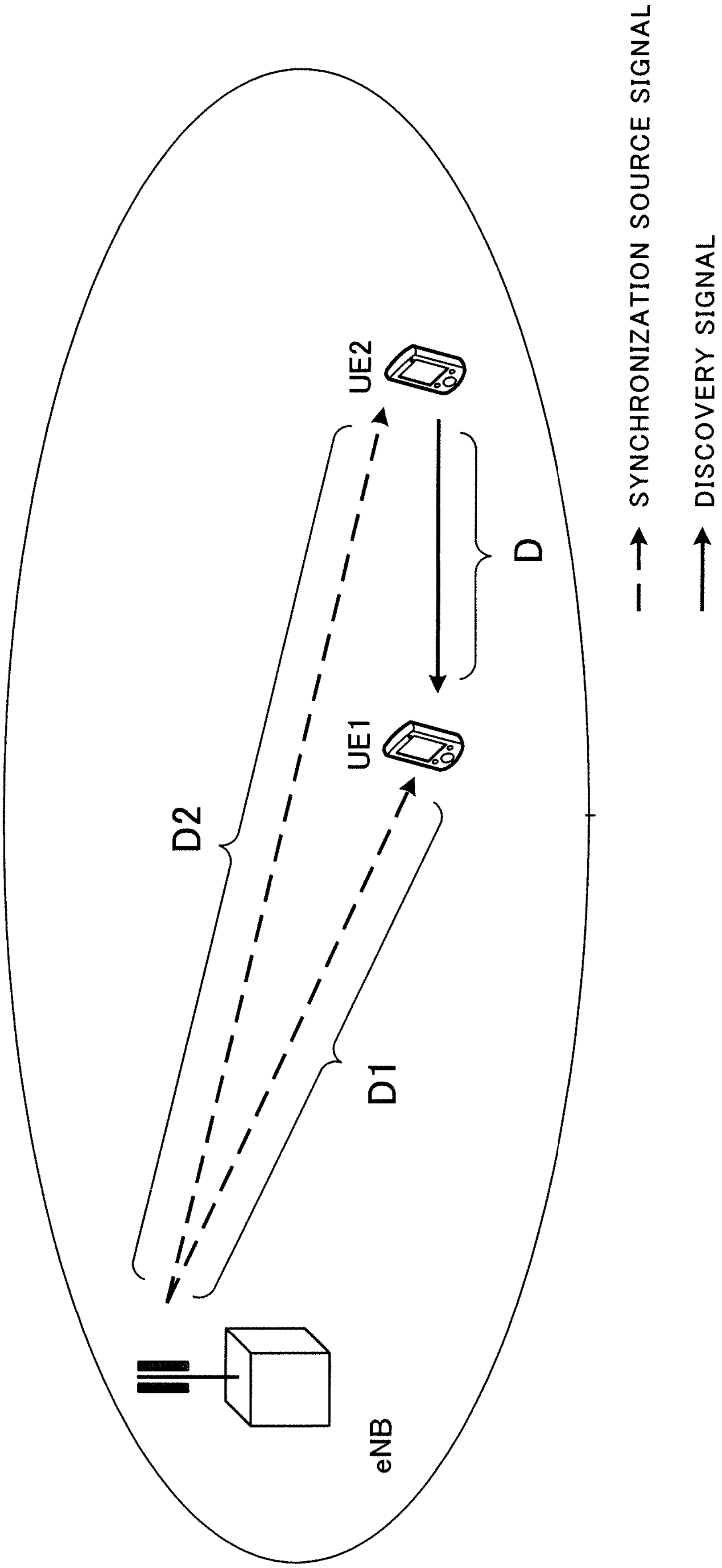
SYNCHRONIZATION SOURCE SIGNAL
DISCOVERY SIGNAL
UE2
UE1
D
D2
D1
eNB

FIG.2

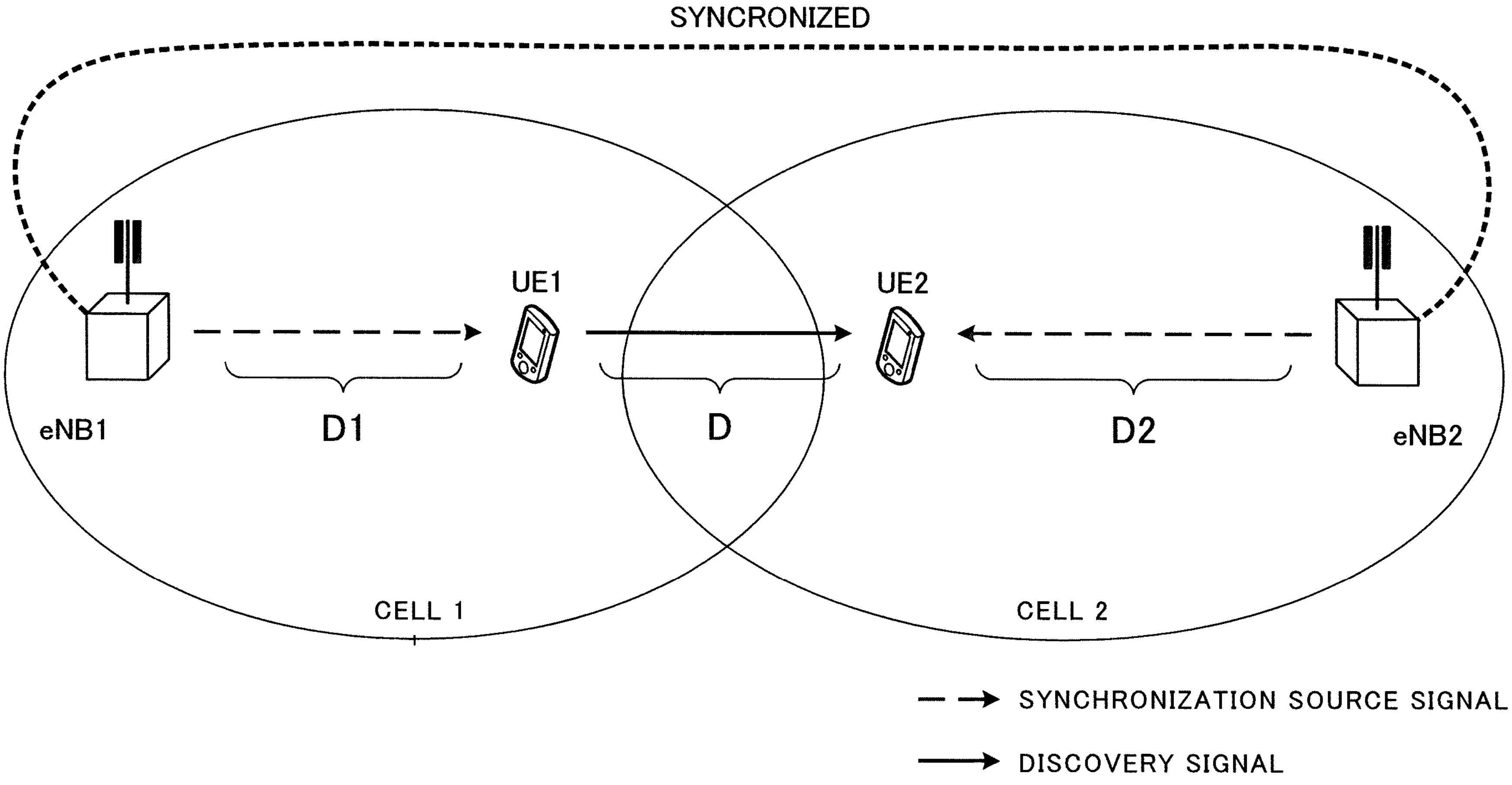
SYNCRONIZED
eNB1
D1
UE1
D
UE2
D2
eNB2
CELL 1
CELL 2
SYNCHRONIZATION SOURCE SIGNAL
DISCOVERY SIGNAL

FIG.3

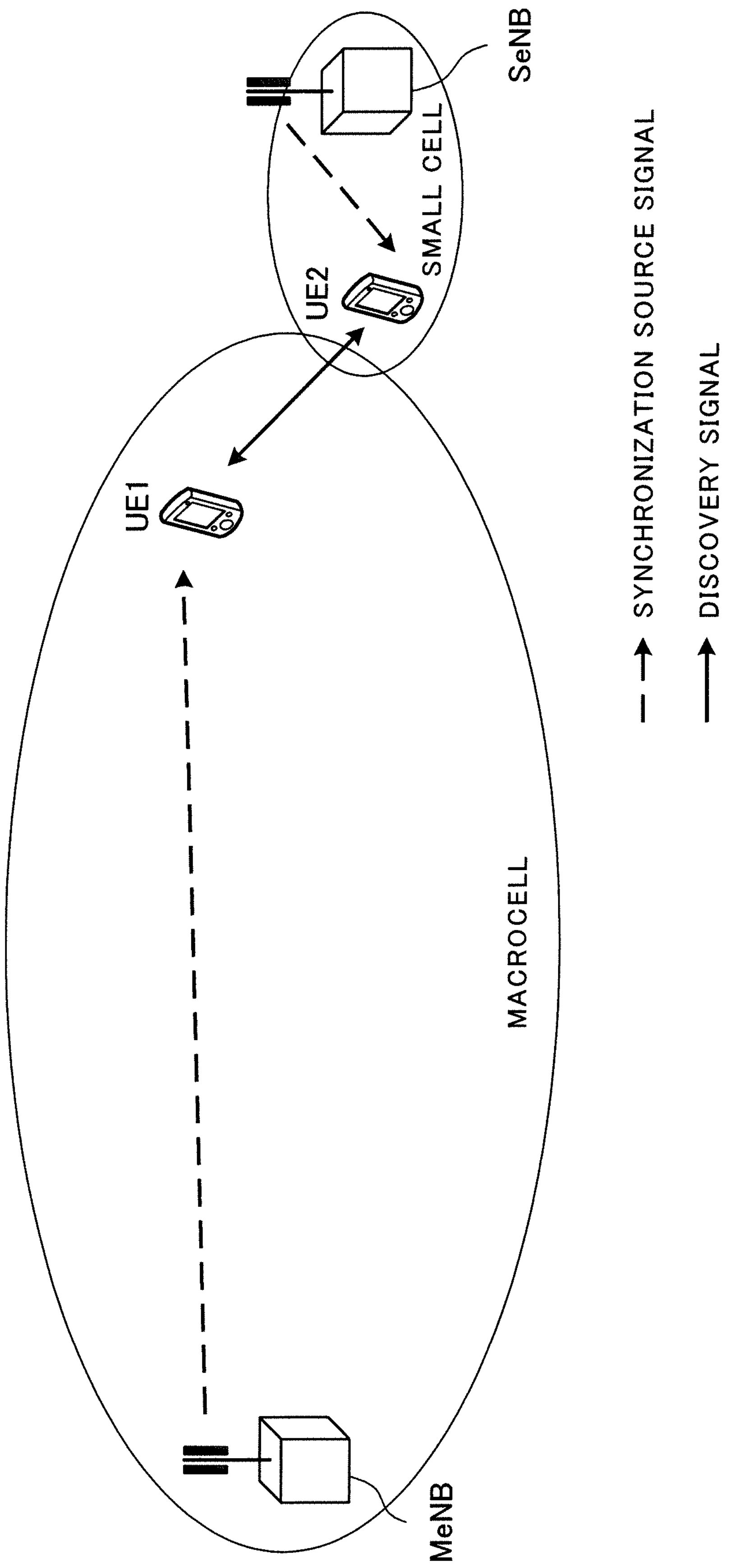
SeNB
SMALL CELL
UE2
UE1
MACROCELL
MeNB
SYNCHRONIZATION SOURCE SIGNAL
DISCOVERY SIGNAL

FIG.4

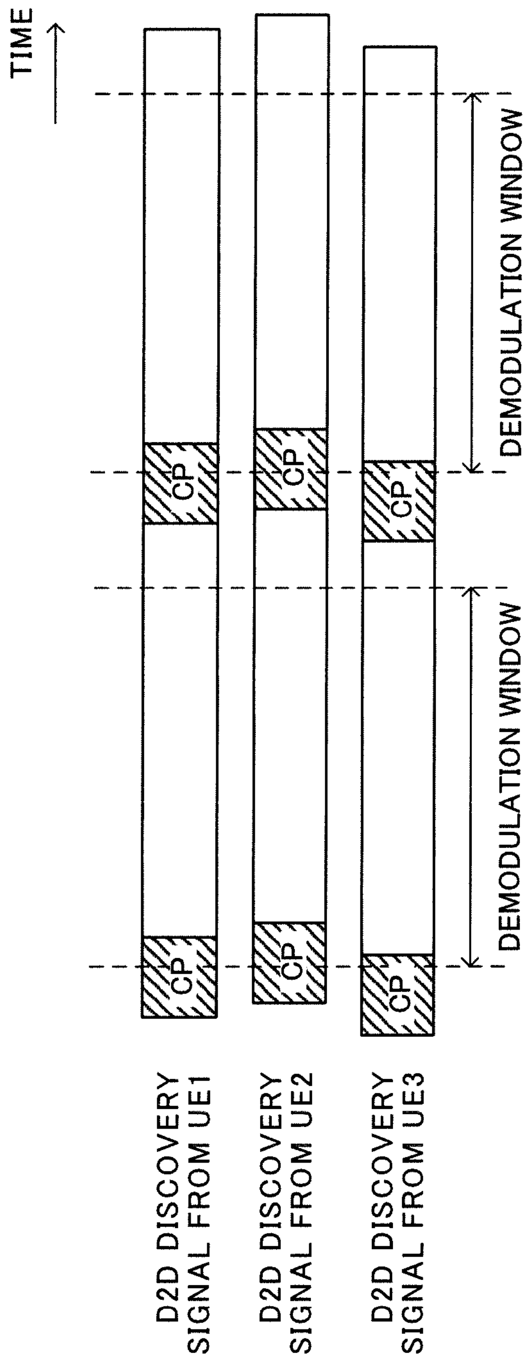
TIME
DEMODULATION WINDOW
DEMODULATION WINDOW
CP
CP
CP
CP
CP
CP
D2D DISCOVERY SIGNAL FROM UE1
D2D DISCOVERY SIGNAL FROM UE2
D2D DISCOVERY SIGNAL FROM UE3

FIG.5

FIG.6A

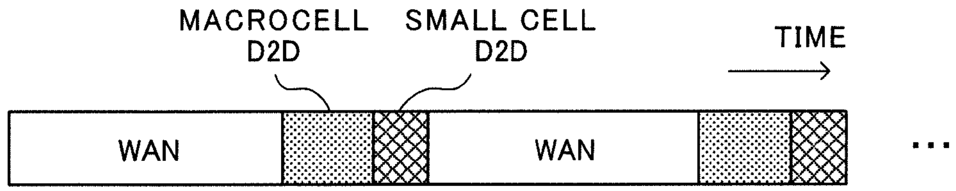


FIG.6B

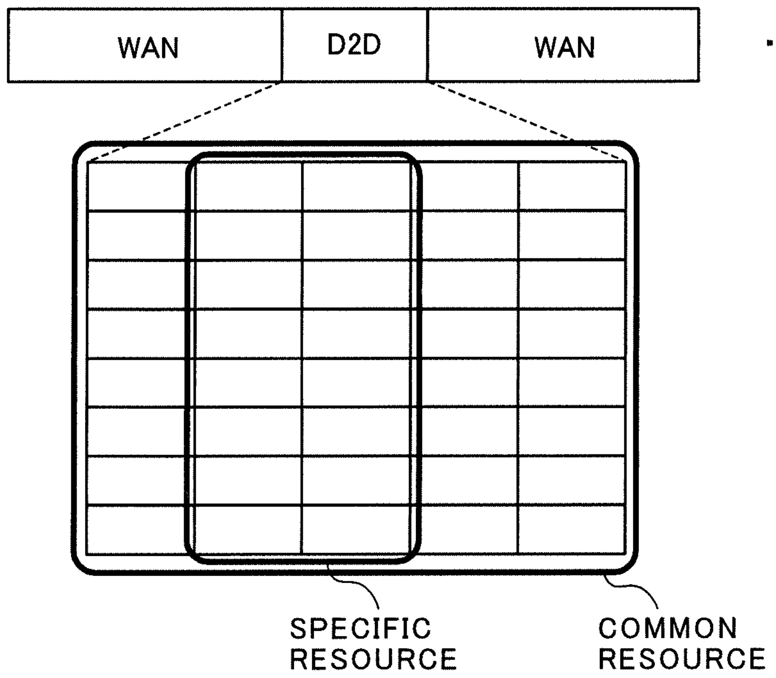


FIG.6C

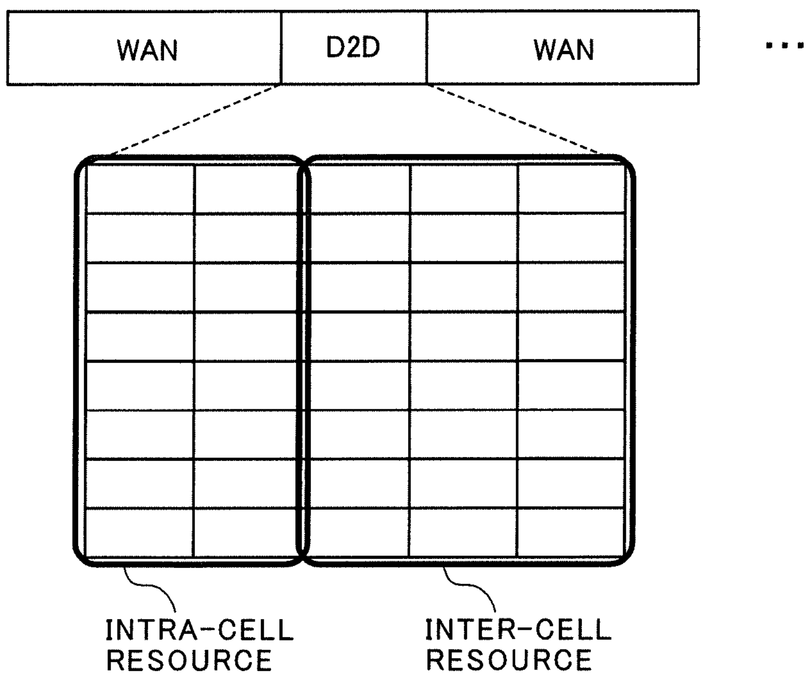

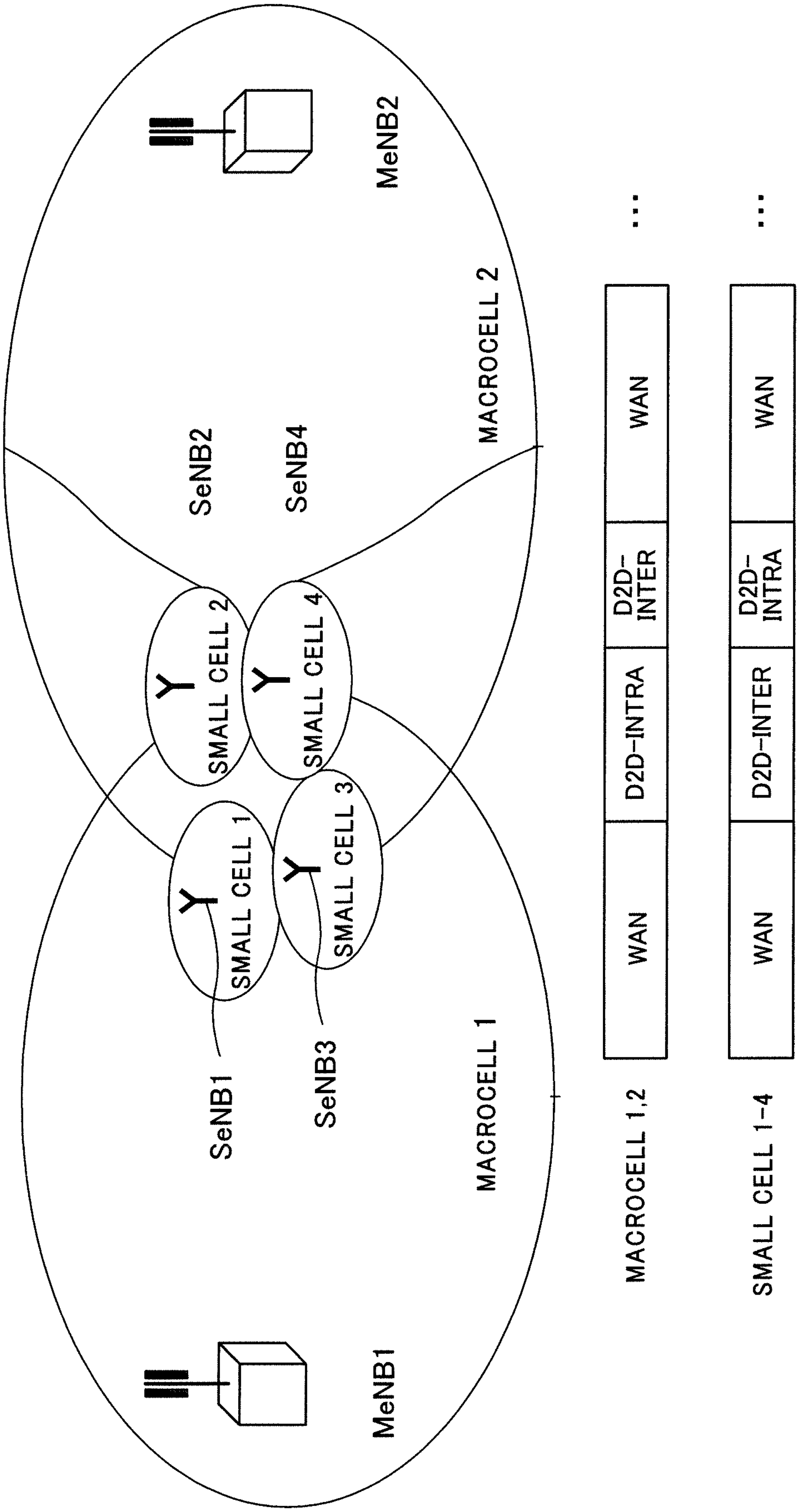
MeNB1
MeNB2
MACROCELL 1
MACROCELL 2
SMALL CELL 1
SMALL CELL 2
SMALL CELL 3
SMALL CELL 4
SeNB1
SeNB2
SeNB3
SeNB4
MACROCELL 1,2
WAN
D2D-INTRA
D2D-INTER
WAN
...
SMALL CELL 1-4
WAN
D2D-INTER
D2D-INTRA
WAN
...

FIG.7

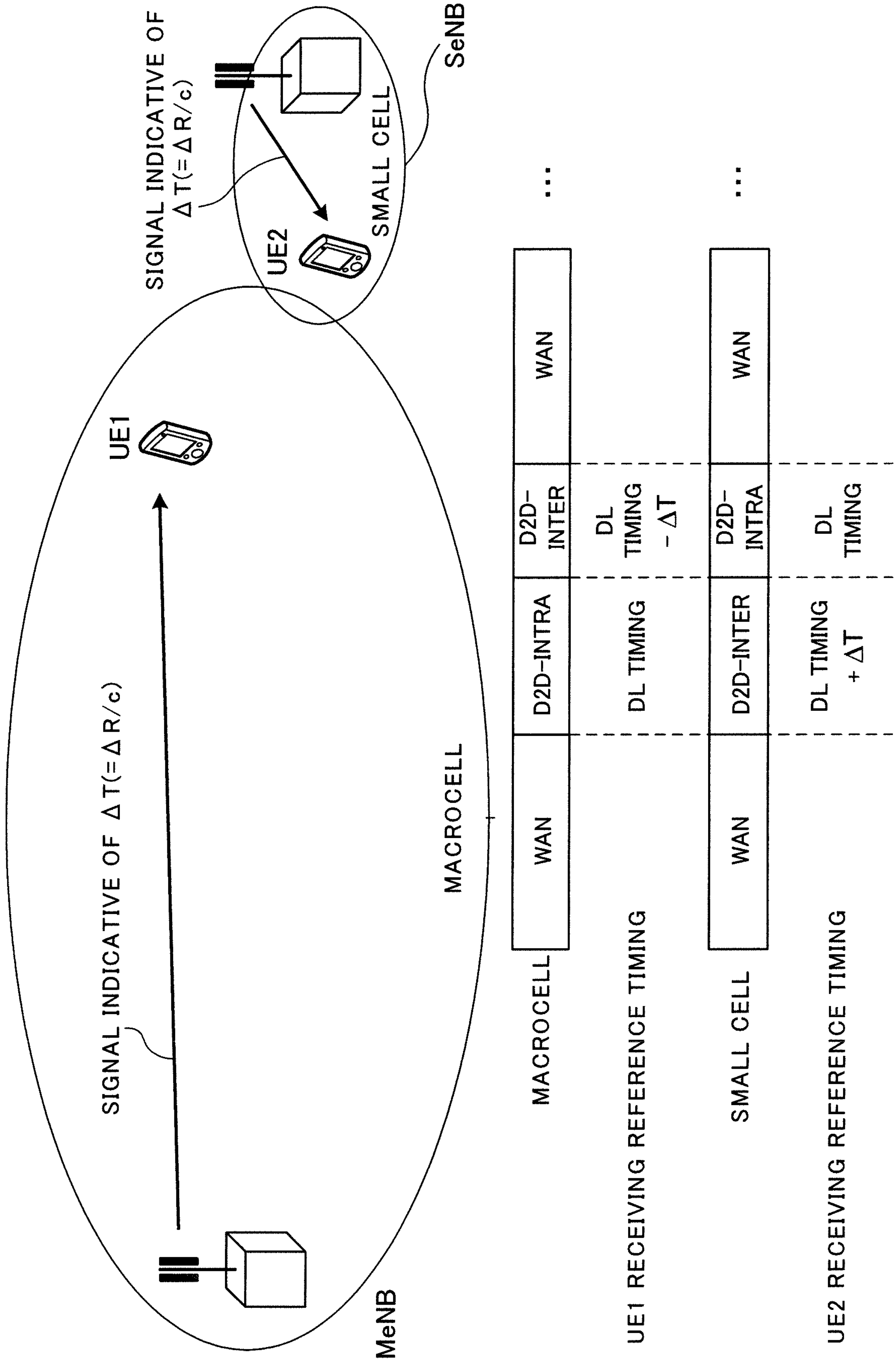
SIGNAL INDICATIVE OF ΔT(=ΔR/c)
SIGNAL INDICATIVE OF ΔT(=ΔR/c)
UE1
UE2
SMALL CELL
SeNB
MeNB
MACROCELL
MACROCELL
UE1 RECEIVING REFERENCE TIMING
SMALL CELL
UE2 RECEIVING REFERENCE TIMING
WAN
D2D-INTRA
D2D-INTER
WAN
DL TIMING
DL TIMING - ΔT
WAN
D2D-INTER
D2D-INTRA
WAN
DL TIMING + ΔT
DL TIMING
...
...

FIG.8

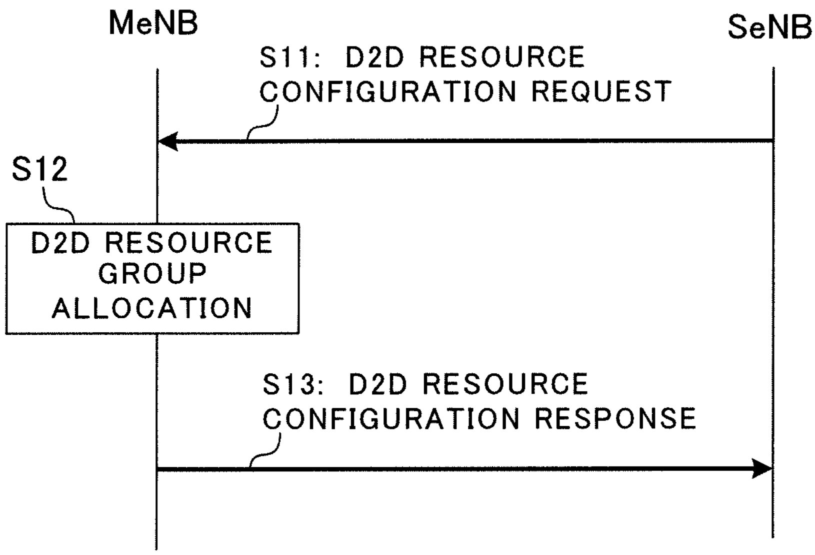
MeNB
SeNB
S11: D2D RESOURCE CONFIGURATION REQUEST
S12
D2D RESOURCE GROUP ALLOCATION
S13: D2D RESOURCE CONFIGURATION RESPONSE

FIG.9

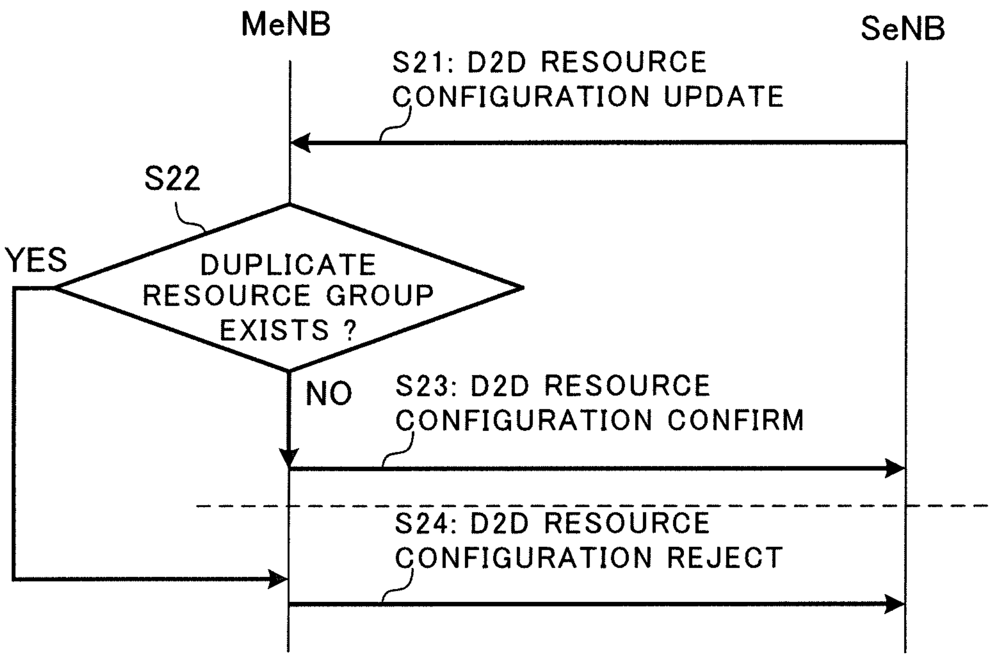
MeNB
SeNB
S21: D2D RESOURCE CONFIGURATION UPDATE
S22
DUPLICATE RESOURCE GROUP EXISTS ?
YES
NO
S23: D2D RESOURCE CONFIGURATION CONFIRM
S24: D2D RESOURCE CONFIGURATION REJECT

FIG.10

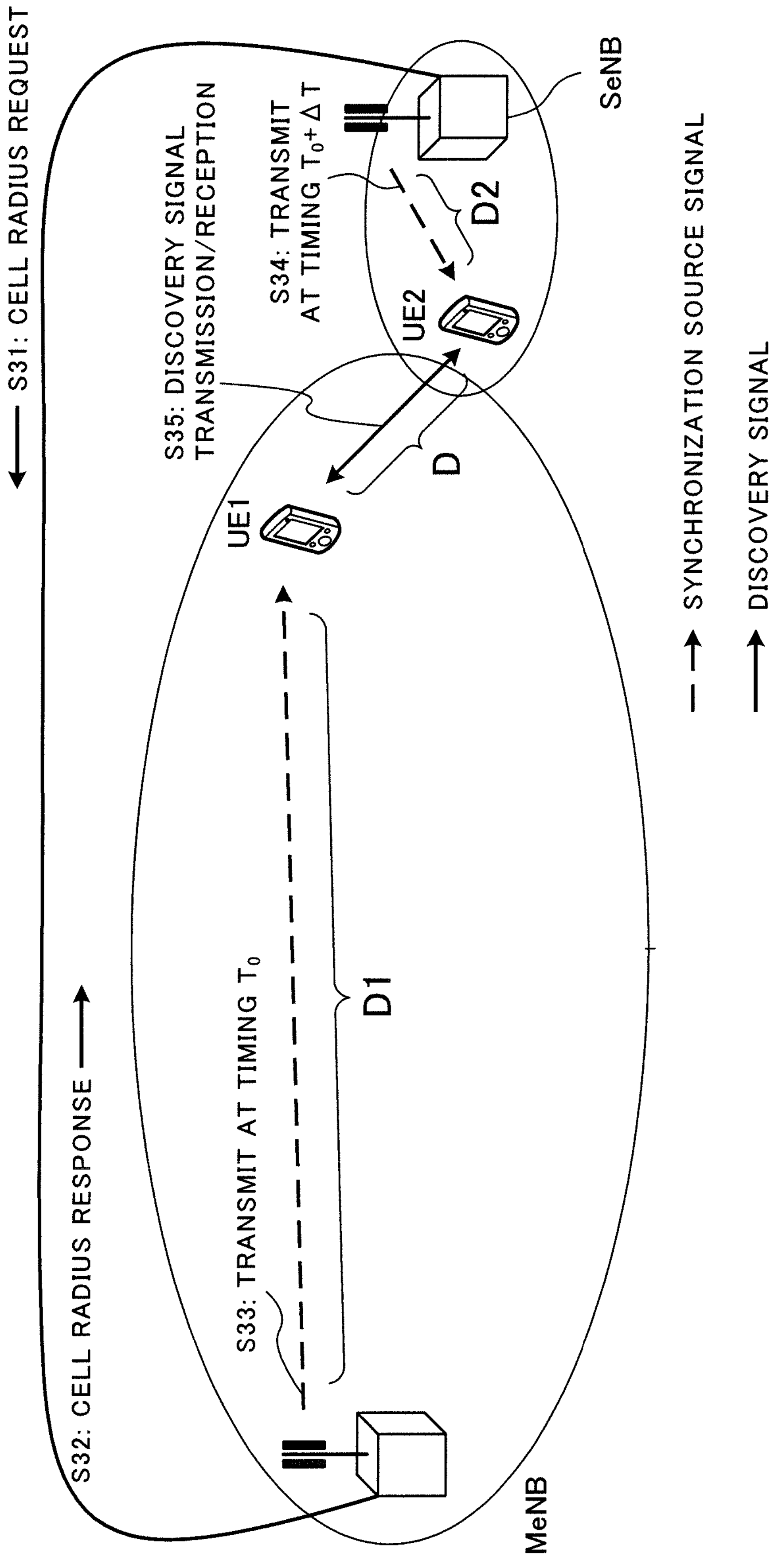
S31: CELL RADIUS REQUEST
S32: CELL RADIUS RESPONSE
S33: TRANSMIT AT TIMING $T_0$
S34: TRANSMIT AT TIMING $T_0+\Delta T$
S35: DISCOVERY SIGNAL TRANSMISSION/RECEPTION
SeNB
MeNB
UE1
UE2
D
D1
D2
SYNCHRONIZATION SOURCE SIGNAL
DISCOVERY SIGNAL

FIG.11

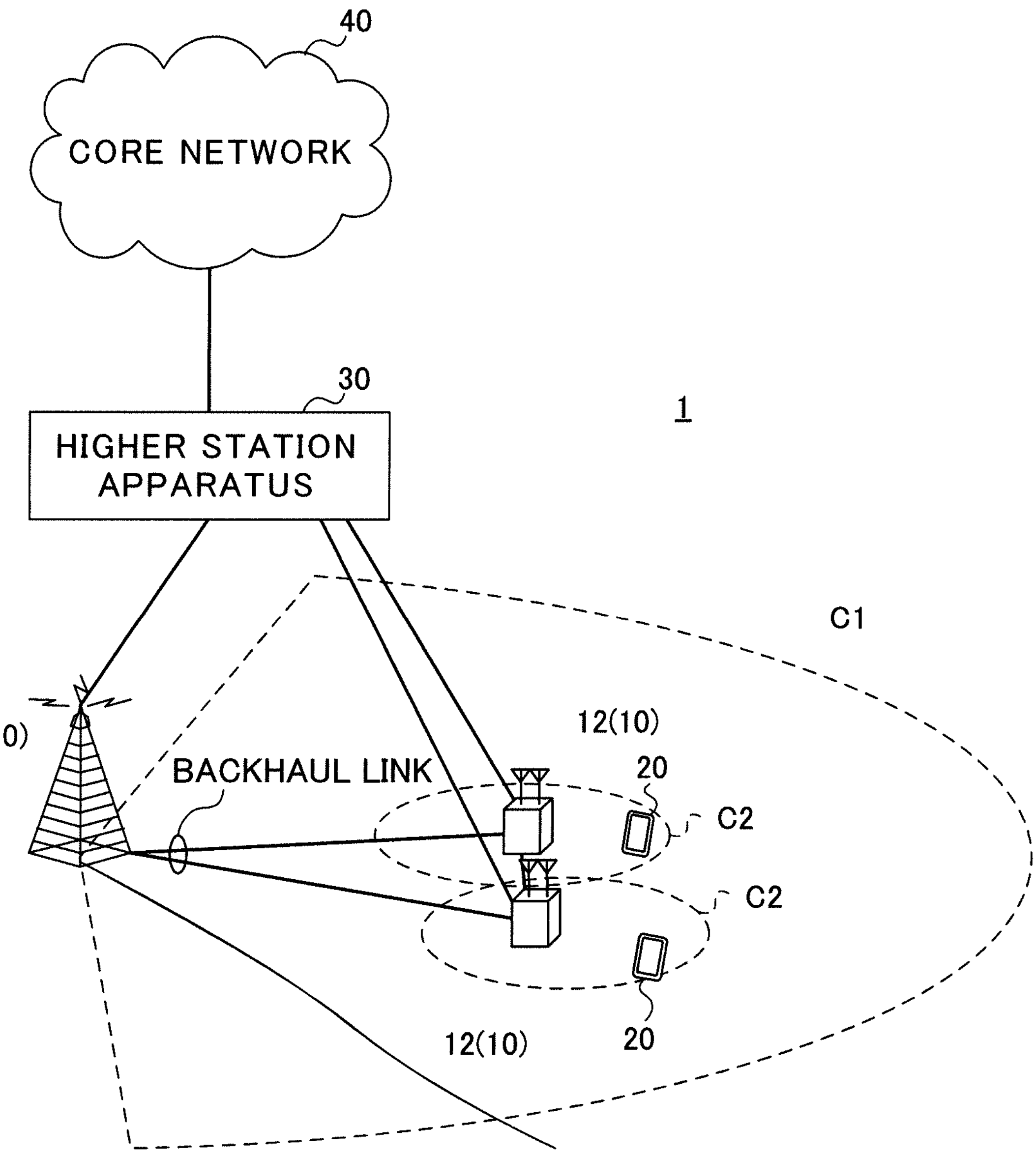
40
CORE NETWORK
30
HIGHER STATION APPARATUS
1
C1
11(10)
12(10)
BACKHAUL LINK
20
C2
C2
12(10)
20

FIG.12

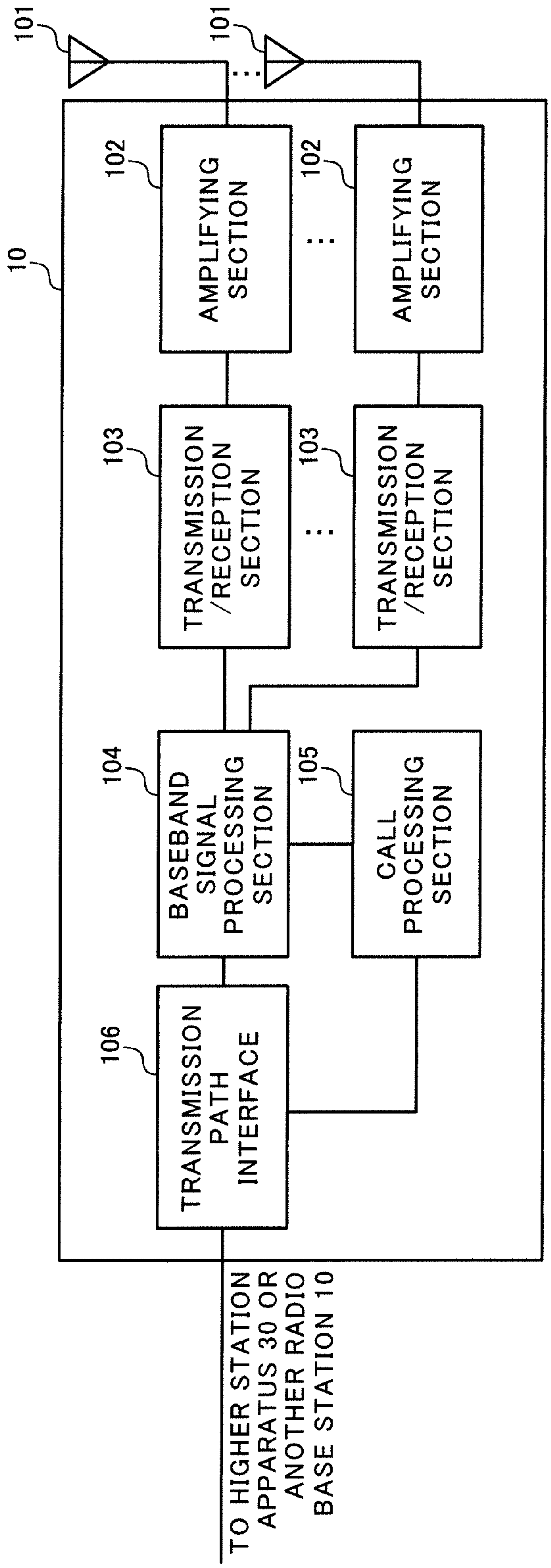
101
101
10
102
AMPLIFYING SECTION
102
AMPLIFYING SECTION
103
TRANSMISSION /RECEPTION SECTION
103
TRANSMISSION /RECEPTION SECTION
104
BASEBAND SIGNAL PROCESSING SECTION
105
CALL PROCESSING SECTION
106
TRANSMISSION PATH INTERFACE
TO HIGHER STATION APPARATUS 30 OR ANOTHER RADIO BASE STATION 10

FIG.13

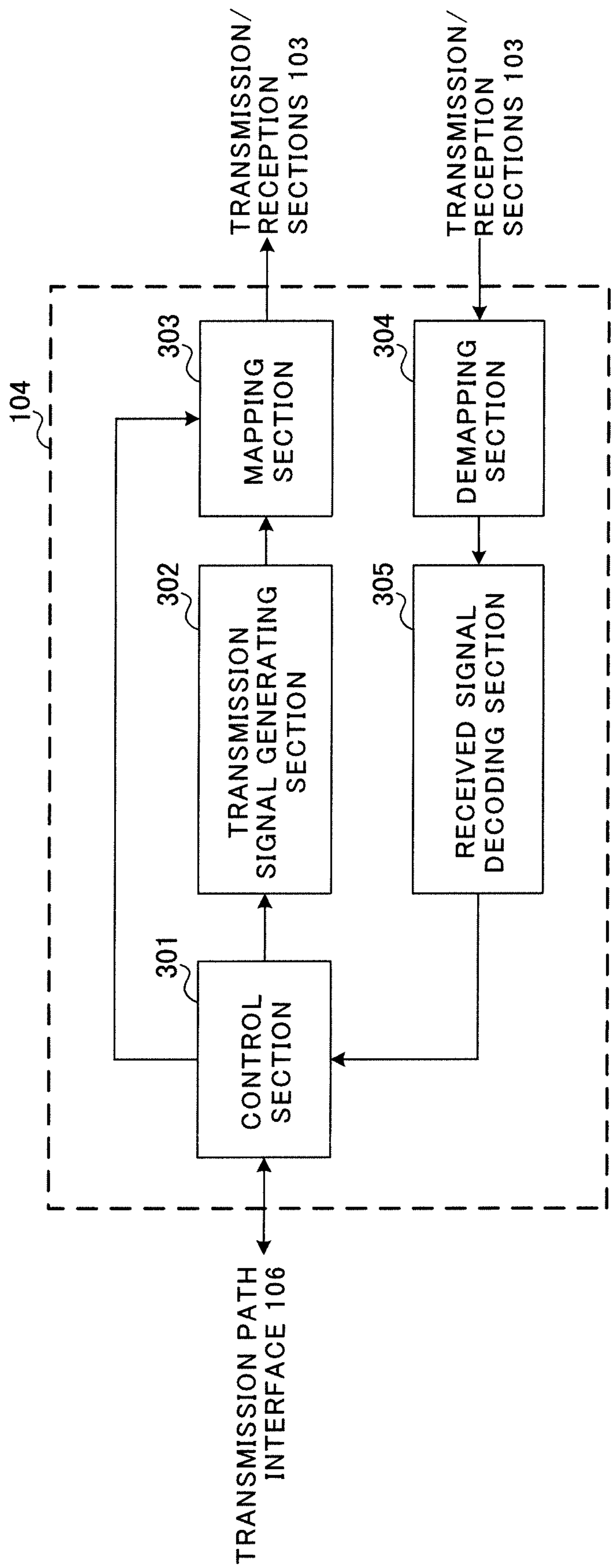
104
301
CONTROL SECTION
302
TRANSMISSION SIGNAL GENERATING SECTION
303
MAPPING SECTION
304
DEMAPPING SECTION
305
RECEIVED SIGNAL DECODING SECTION
TRANSMISSION/ RECEPTION SECTIONS 103
TRANSMISSION/ RECEPTION SECTIONS 103
TRANSMISSION PATH INTERFACE 106

FIG.14

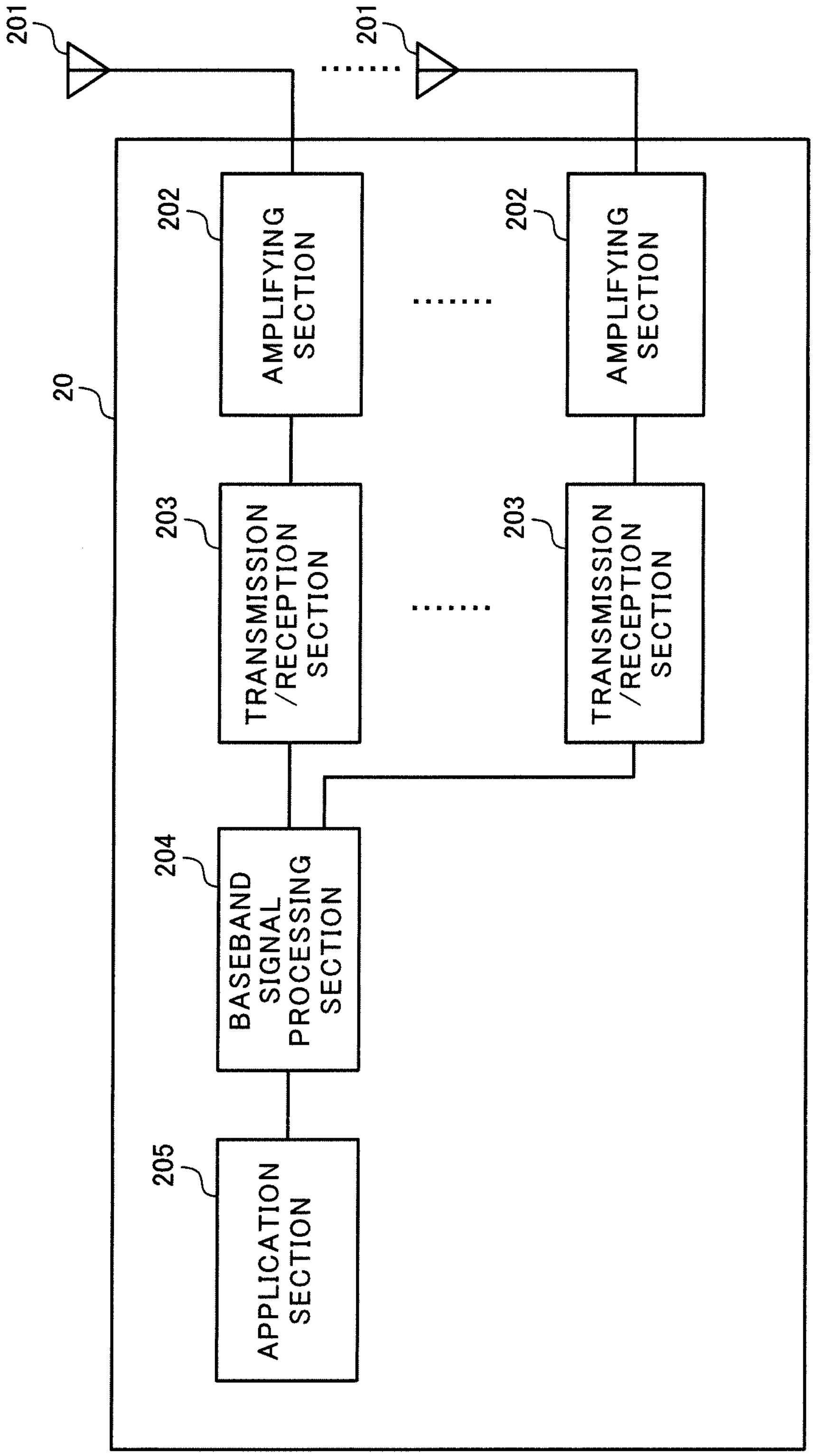
201
201
20
202
AMPLIFYING SECTION
202
AMPLIFYING SECTION
203
TRANSMISSION /RECEPTION SECTION
203
TRANSMISSION /RECEPTION SECTION
204
BASEBAND SIGNAL PROCESSING SECTION
205
APPLICATION SECTION

FIG.15

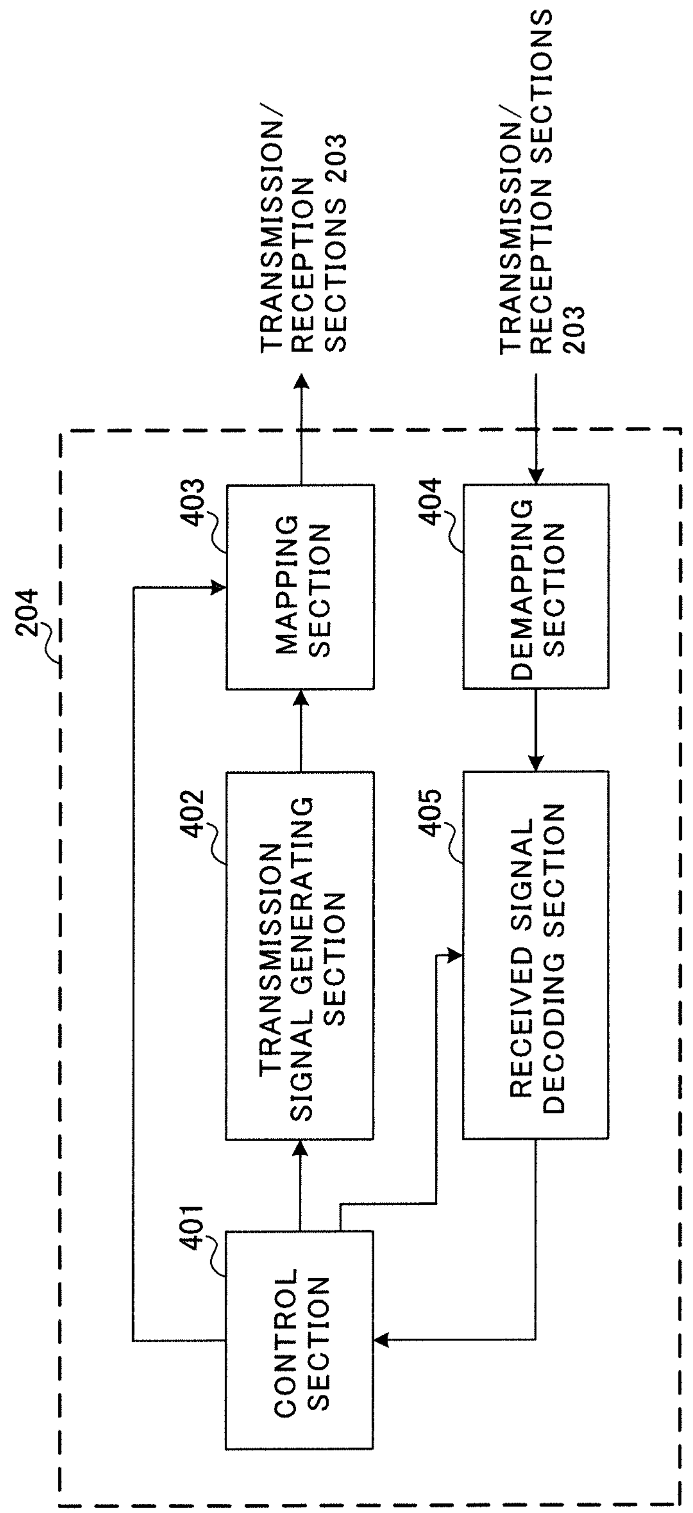
TRANSMISSION/
RECEPTION
SECTIONS 203
TRANSMISSION/
RECEPTION SECTIONS
203
204
403
MAPPING
SECTION
404
DEMAPPING
SECTION
402
TRANSMISSION
SIGNAL GENERATING
SECTION
405
RECEIVED SIGNAL
DECODING SECTION
401
CONTROL
SECTION

FIG.16

## INTERNATIONAL SEARCH REPORT

International application No. PCT/JP2015/051599

A. CLASSIFICATION OF SUBJECT MATTER
*H04W8/00*(2009.01)i, *H04W56/00*(2009.01)i, *H04W72/04*(2009.01)i, *H04W84/10* (2009.01)i, *H04W92/18*(2009.01)i

According to International Patent Classification (IPC) or to both national classification and IPC

B. FIELDS SEARCHED

Minimum documentation searched (classification system followed by classification symbols)
H04W8/00, H04W56/00, H04W72/04, H04W84/10, H04W92/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | ETRI, Discussion on resource allocation for D2D discovery, 3GPP TSG RAN WG1 Meeting #75 R1-135279, 2013.11.02 | 1-5,7-9 |
| A | ETRI, Discussion on Inter-Cell D2D Discover, 3GPP TSG-RAN WG2 #84 R2-134149, 2013.11.01 | 1-5,7-9 |
| A | ZTE, Discussion of D2D Discovery, 3GPP TSG-RAN WG1 #74 R1-133149, 2013.08.10, pp.1-7 | 1-5,7-9 |
| A | NTT DOCOMO, INC., Discussion on synchronization of D2D discovery, 3GPP TSG RAN WG1 Meeting #74bis R1-134502, 2013.09.28 | 4,6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 March 2015 (25.03.15) | 07 April 2015 (07.04.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

INTERNATIONAL SEARCH REPORT

International application No. PCT/JP2015/051599

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-244422 A (NTT Docomo Inc.), 10 December 2012 (10.12.2012), paragraphs [0009] to [0012], [0031] to [0047]; fig. 1 to 7 & WO 2012/157550 A1 & US 2014/0098784 A1 & CN 103548399 A | 4,6 |
| A | Alcatel-Lucent Shanghai Bell, Alcatel-Lucent, D2D timing, 3GPP TSG RAN WG1 Meeting #74 R1-132994, 2013.08.10 | 4,6 |

Form PCT/ISA/210 (continuation of second sheet) (July 2009)

**INTERNATIONAL SEARCH REPORT**

International application No.
PCT/JP2015/051599

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
(See extra sheet)

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

**INTERNATIONAL SEARCH REPORT**

International application No.
PCT/JP2015/051599

Continuation of Box No.III of continuation of first sheet(2)

The special technical feature of the invention set forth in claims 1-5 and 7-9 relates to a user terminal that controls transmission/reception timing of an inter-terminal discovery signal on the basis of resource allocation information indicating that a resource for transmission of the inter-terminal discovery signal is allocated to a plurality of cells with different cell radii by time-division multiplexing, and the special technical feature of the invention set forth in claim 6 relates to a user terminal that controls transmission/reception timing of the inter-terminal discovery signal on the basis of the reception timing of a predetermined downstream signal of which transmission timing is adjusted on the basis of a difference in cell radius between a cell in which the terminal is located and a different cell.

These inventions have no technical relationship involving one or more of the same or corresponding special technical features, and therefore cannot be considered to be so linked as to form a single general inventive concept.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014015823 A


### Non-patent literature cited in the description


- Evolved Universal Terrestrial Radio Access (E-UTRA); Further advancements for E-UTRA physical layer aspects. 3GPP TR 36.814
- Key drivers for LTE success: Services Evolution. *3GPP,* September 2011, http://www.3gpp.org/ftp/Information/presentations/presentations_2011/2011_09_LTE_Asia/2011_LTE-Asia_3GPP_Service_evolution.pdf